# EUROPEAN PATENT SPECIFICATION

(11) **EP 4 582 580 B1**
(45) Date of publication and mention of the grant of the patent: **07.10.2026**
(21) Application number: 23860408.6
(22) Date of filing: 30.08.2023
(51) Int. Cl.: C23C 2/06, C22C 18/04, C23C 30/00, B32B 15/01, C23C 2/40, C23C 28/02, C23C 2/26, C23C 2/28

(54) **PLATED STEEL MATERIAL**
PLATTIERTES STAHLMATERIAL
MATÉRIAU D'ACIER PLAQUÉ

(30) Priority: 30.08.2022 JP 2022136497
(43) Date of publication of application: 09.07.2025
(73) Proprietor: NIPPON STEEL CORPORATION, Chiyoda-ku Tokyo 100-8071 (JP)
(72) Inventor: ISHII, Kotaro, Tokyo 100-8071 (JP); TOKUDA, Kohei, Tokyo 100-8071 (JP); MITSUNOBU, Takuya, Tokyo 100-8071 (JP); GOTO, Yasuto, Tokyo 100-8071 (JP); SAITO, Mamoru, Tokyo 100-8071 (JP)
(74) Representative: Vossius & Partner Patentanwälte Rechtsanwälte mbB
(86) International application number: PCT/JP2023/031496
(87) International publication number: WO 2024/048646

(56) References cited:
- WO-A1-2018/139619
- WO-A1-2022/080004
- WO-A1-2022/080004
- WO-A1-2022/107837
- JP-B1- 7 052 942

## Description

### Technical Field

The present invention relates to a plated steel material.

The present application claims priority based on Japanese Patent Application No. 2022-136497 filed in Japan on August 30, 2022.

### Background Art

It is widely known that Zn plating is applied to a surface of a steel material to improve corrosion resistance of the steel material. **In** particular, Zn-Al-Mg-based plated steel sheets in which Al and Mg are added to Zn to improve corrosion resistance are often used in automobiles, home appliances, building materials, and civil engineering fields. Among the environments for these applications, there are always a water wet environment where rainwater or the like is accumulated and a water flow environment where water flows. Under these environments, there is a problem that corrosion resistance is not sufficient even with a Zn-Al-Mg-based plated steel sheet.

For example, Patent Document 1 describes a Zn-Al-Mg-based plated steel sheet including: a steel sheet; an alloy layer containing Fe and Si; and a plating layer, wherein an average composition of the plating layer and the alloy layer includes, in terms of mass%, Al: 45.0 to 65.0%, Si: 0.50 to 5.00%, and Mg: 1.00 to 10.00%, with the remainder being Zn, Fe, and impurities, the plating layer contains 0.1 to 20.0% of a Mg-Si phase in terms of volume fraction, when a range of 1 µm in a thickness direction of the plating layer from a surface of the plating layer is defined as a surface layer portion of the plating layer, an average equivalent circle diameter of the Mg-Si phase in a direction in which the plating layer of the surface layer portion is viewed in plan view is 0.1 to 15.0 µm, when a position of 1/2 of the thickness of the plating layer from the surface of the plating layer toward an interface between the plating layer and the alloy layer is defined as a center of a thickness of the plating layer, and a Si content is measured over the entire thickness of the plating layer, an integrated value of the Si content from the surface of the plating layer to the center of the thickness of the plating layer is 0.55 times or more an integrated value of the Si content from the surface of the plating layer to the interface.

Patent Document 2 describes a hot-dip Al-Zn-Mg-Si plated steel sheet including a plating film on a sheet surface, in which the plating film includes an interface alloy layer present at an interface with a base steel sheet and a main layer present on the alloy layer, the plating film contains 25 to 80 mass% of Al, more than 0.6 to 15 mass% of Si, and more than 0.1 to 25 mass% of Mg, and the area fraction of Mg₂Si on the surface of the main layer is 10% or more.

Patent Document 3 describes a method for forming a metal-coated steel strip, including the steps of: (a) passing a strip through a hot-dip metal coating bath containing Al, Zn, Si, Mg, and optionally other elements to form a molten Al-Zn-Si-Mg alloy coating on the strip; (b) cooling the coated strip to solidify the molten Al-Zn-Si-Mg alloy on the strip and form a solidified metal coating having a microstructure including alpha Al-phase dendrites, Zn-rich phases in interdendrite regions, and Mg₂Si phase particles in interdendrite regions; (c) heat-treating the coated strip at a temperature and for a time to form an Al-Zn phase solid solution from an as-cast microstructure of alpha Al-phase dendrites and Zn-rich interdendrite phases to promote spheroidization of Mg₂Si phase particles dispersed in the coating film; and (d) cooling the heat-treated strip.

Patent Document 4 describes a high heat resistant hot-dip Zn-Al-based alloy plated steel sheet in which an alloy plating layer composed of Al: 3.0 to 7.0 mass%, Si: 0.05 to 0.5 mass%, Mg: 0.01 to 0.5 mass%, and the remainder Zn is formed on a sheet surface, and an Fe-Al-Si-based alloy layer in which Si is concentrated is formed between the alloy plating layer and the base steel sheet.

Patent Document 5 describes a molten Zn-Al-Mg-based plated steel material including a plating layer formed on a surface of a steel material, wherein the plating layer contains Mg: 1 to 10 mass% and Al: 4 to 22 mass% in terms of average composition, with the remainder being Zn and impurities, the plating layer contains 10 to 70% of an [Al·Zn mixed structure] in terms of area fraction in a cross section of the plating layer in a base of a [ternary eutectic structure of Al/Zn/MgZn₂], the [Al·Zn mixed structure] includes a first region having a Zn concentration in a range of 75 mass% or more and less than 85 mass% and a second region located inside the first region and having a Zn concentration in a range of 67 mass% or more and less than 75 mass%, a Zn phase and an Al phase are mixed in the second region, and a length of an interface between the Zn phase and the Al phase per 1 µm² of the second region in a cross section of the plating layer is 20 µm or less.

However, in Patent Documents 1 to 5, corrosion resistance (hereinafter, referred to as water wet corrosion resistance and water flow corrosion resistance) in a water wet environment or a water flow environment is not examined.

### Citation List

### Patent Document

[Patent Document 1]
   PCT International Publication No. WO 2019/049307
[Patent Document 2]
   Japanese Unexamined Patent Application, First Publication No. 2016-166414
[Patent Document 3]
   Published Japanese Translation No. 2012-528244 of the PCT International Publication
[Patent Document 4]
   Japanese Unexamined Patent Application, First Publication No. 2000-265255
[Patent Document 5]
   Japanese Unexamined Patent Application, First Publication No. 2021-195564

Patent documents WO2022/080004 A1 and WO2018/139619 A1 disclose Zn-Al-Mg-based hot dip plated steels with good corrosion resistance and wherein the controlled content of the coating compositions and phases present in the coatings provide good corrosion resistance.

### Summary of Invention

### Technical Problem

The present invention has been made in view of the above circumstances, and an object of the present invention is to provide a plated steel material having excellent water wet corrosion resistance and water flow corrosion resistance, and also having excellent sacrificial corrosion resistance.

### Solution to Problem

In order to solve the above problem, the present invention is defined by the appended claims.

### Advantageous Effects of Invention

According to the present invention, it is possible to provide a plated steel material having excellent water wet corrosion resistance and water flow corrosion resistance and also having excellent sacrificial corrosion resistance.

### Description of Embodiments

Conventionally, as a plating material for water wet and water flow environments, for example, a pure Al plating material called Type 2 for corrugated tubes is known. However, the sacrificial corrosion resistance of Al is weak, and there is a problem in appearance due to generation of red rust from the end surface of the steel material. In addition, when the sheet thickness of the steel material increases, the progress of corrosion from the end surface becomes remarkable, and there is a problem that the product life is shortened.

On the other hand, the Zn-Al-Mg-based plating material has sufficient sacrificial corrosion resistance, and has excellent corrosion resistance as compared with Zn plating in a normal environment. However, in water wet and water flow environments, a corrosion product easily flows away, and thus the Zn-Al-Mg-based plating material is difficult to exhibit high corrosion resistance as compared with the corrosion resistance in a normal environment.

Incidentally, the Zn-Al-Mg-based plating layer is formed of a plurality of constituent phases. Although details will be described later, phases and microstructures such as an Al phase, an Al-Zn phase, a Zn-Al phase, a Mg₂Zn phase, a Mg₂Zn₁₁ phase, a Zn phase, and a [ternary eutectic structure of Al/MgZn₂/Zn] account for most of the proportion of the phase constituent.

The present inventors have focused on the relationship between the water wet corrosion resistance and water flow corrosion resistance of the Zn-Al-Mg-based plating in a water wet environment and the constituent phases and constituent microstructures of the plating layer. As a result of intensive studies, the present inventors have found that the water wet corrosion resistance and the water flow corrosion resistance can be improved by appropriately adjusting the proportion of the constituent phases and the constituent microstructures.

It is known that Al as a plating component is precipitated as a plurality of phases during solidification, that is, as an Al phase, an Al-Zn phase, and a Zn-Al phase. Among them, the Al phase is the most excellent in water resistance and water flow resistance, but is poor in sacrificial corrosion resistance. In addition, although the Al-Zn phase has the highest sacrificial corrosion resistance among the three phases, the Al-Zn phase is inferior in water wet corrosion resistance and water flow corrosion resistance. Further, the Zn-Al phase has intermediate properties with respect to the properties of the above two phases in terms of water wet corrosion resistance, water flow corrosion resistance, and sacrificial corrosion resistance.

Therefore, the present inventors have considered that a plated steel material having excellent corrosion resistance can be obtained by appropriately adjusting the proportion of the Al phase in the Zn-Al-Mg-based plating layer. As a result of intensive studies, the present inventors have found a plated steel material having excellent water wet corrosion resistance and water flow corrosion resistance and sacrificial corrosion resistance by controlling the phase proportion in the plating layer. A steel structure manufactured using the plated steel material according to the present invention is excellent in water wet corrosion resistance, water flow corrosion resistance, and sacrificial corrosion resistance. Hereinafter, the plated steel material according to an embodiment of the present invention will be described.

A plated steel material according to the present invention is disclosed in claim 1 and includes: a steel material; and a plating layer disposed on a surface of the steel material, wherein the plating layer has an average chemical composition including, in terms of mass%, Al: 10.0% to 40.0%, Mg: more than 4.0% to 8.5%, Si: 0% to 5.0%, Ca: 0% to 3.00%, Sn: 0% to 3.00%, Bi: 0% to 1.00%, In: 0% to 1.00%, Y: 0% to 0.50%, La: 0% to 0.50%, Ce: 0% to 0.50%, Sr: 0% to 0.50%, B: 0% to 1.00%, P: 0% to 0.50%, Cr: 0% to 0.25%, Ti: 0% to 0.25%, V: 0% to 0.25%, Zr: 0% to 0.25%, Ni: 0% to 1.00%, Co: 0% to 0.25%, Nb: 0% to 0.25%, Cu: 0% to 1.00%, Mn: 0% to 0.25%, Mo: 0% to 0.25%, W: 0% to 0.25%, Ag: 0% to 1.00%, Li: 0% to 0.50%, Na: 0% to 0.05%, K: 0% to 0.05%, Fe: 0% to 5.00%, Sb: 0% to 0.50%, Pb: 0% to 0.50%, Ba: 0% to 0.25%, and the remainder: Zn and impurities, in a cross section of the plating layer perpendicular to a surface of the steel material, a microstructure observed with a scanning electron microscope includes, in terms of area fraction, a MgZn₂ phase: 10% or more and 50% or less, a total of an Al phase, an Al-Zn phase, and an Zn-Al phase: 15% or more and 75% or less, a [ternary eutectic structure of Al/MgZn₂/Zn]: 0% or more and 65% or less, and the remainder: 0% or more and 5.0% or less, and an area ratio (([Al] + [Zn - Al])/[Al - Zn]) of a total of the Al phase and the Zn-Al phase to the Al-Zn phase is 0.8 or more.

In the plated steel material according to the present embodiment, in the average chemical composition of the plating layer, Si is preferably 0.05% to 5.0%, and an integrated intensity value of each element when depth analysis by glow discharge optical emission spectrometry (GDS) is performed on a surface layer from a surface of the plating layer to a depth of 0.5 µm preferably satisfies the following formula (1): $IΣ \left(Si\right) / \left(IΣ\left(Zn\right)+IΣ\left(A1\right)\right) \geq 0.005$ (1) wherein IΣ(Si), IΣ(Zn), and IΣ(Al) in formula (1) are integrated intensity values of Si, Zn, and Al detected by GDS, respectively.

In the plated steel material according to the present embodiment, in the average chemical composition of the plating layer, Ca is preferably 0.01% to 3%, the plating layer preferably contains any one of a Ca₃Al₂Si₂ phase, a CaAl₂Si₂ phase, a CaAl₂Si₂ phase, and a CaAl₁₋ₓSi₁₊ₓ phase (where x is 0 to 0.2), and an integrated intensity value of each element when depth analysis by GDS is performed on a surface layer from a surface of the plating layer to a depth of 0.5 µm preferably satisfies the following formula (2): $IΣ \left(Ca\right) / IΣ \left(Si\right) \geq 2.0$ (2) wherein IΣ(Ca) and IΣ(Si) in formula (2) are integrated intensity values of Ca and Si detected by GDS, respectively.

In the following description, the expression "%" of the content of each element in a chemical composition means "mass%". In addition, a numerical range represented by "to" means a range including numerical values described before and after "to" as a lower limit value and an upper limit value. Note that a numerical range in which "more than" or "less than" is attached to the numerical values described before and after "to" means a range not including these numerical values as the lower limit or the upper limit.

The "corrosion resistance" indicates a property that the plating layer itself is hardly corroded. The Zn-based plating layer has a sacrificial corrosion protection action on the steel material. Thus, in the corrosion process of the plated steel sheet, the Zn-based plating layer corrodes and turns into white rust before the steel material corrodes, and after the plating layer turns into white rust and disappears, the steel material corrodes and generates red rust.

The "sacrificial corrosion resistance" indicates a property of suppressing corrosion of the steel material at a portion where steel material is exposed (for example, an end surface portion where the plated steel material is cut, and a portion where steel material is exposed due to cracking of the hot-dip plating layer during processing).

Further, the "water wet corrosion resistance and water flow corrosion resistance" indicate a property that the plating layer itself is hardly corroded when water is dropped on the surface of the plating layer and water flows on the plating layer.

The material of the steel material is not particularly limited. As the steel material, for example, various steel materials, such as general steel, Ni pre-plated steel, Al-killed steel, ultra-low carbon steel, high carbon steel, various high tensile strength steels, and some high alloy steels (a steel containing a reinforcing element such as Ni, Cr, etc.) are applicable. In addition, the steel material is not particularly limited in terms of conditions such as a manufacturing method of a steel material and a manufacturing method of a steel sheet (hot rolling method, pickling method, cold rolling method, etc.). Further, as the steel material, a steel material on which a metal film or an alloy film made of Zn, Ni, Sn, an alloy thereof, or the like is formed with an adhesion amount of 3 g/m² or less may be used.

Next, the plating layer will be described. The plating layer according to the present embodiment includes a Zn-Al-Mg-based alloy layer. The plating layer may include an Al-Fe alloy layer. The Zn-Al-Mg-based alloy layer in which alloying elements such as Al and Mg are added to Zn has improved corrosion resistance as compared with a normal Zn plating layer. For example, even when the thickness of the Zn-Al-Mg-based alloy layer is about a half of that of a normal Zn plating layer, the Zn-Al-Mg-based alloy layer has corrosion resistance equivalent to that of the Zn plating layer. Therefore, the plating layer of the present embodiment also has corrosion resistance equivalent to or higher than that of the Zn plating layer.

The Zn-Al-Mg-based alloy layer is made of a Zn-Al-Mg-based alloy. The Zn-Al-Mg-based alloy means a ternary alloy containing Zn, Al, and Mg.

The Al-Fe alloy layer is an interface alloy layer between the steel material and the Zn-Al-Mg alloy layer.

That is, the plating layer according to the present embodiment may have a single-layer structure of the Zn-Al-Mg alloy layer or a multi-layer structure including the Zn-Al-Mg alloy layer and the Al-Fe alloy layer. In the case of the multi-layer structure, the Zn-Al-Mg alloy layer is preferably a layer constituting the surface of the plating layer. On the outermost surface of the plating layer, an oxide film which is an element constituting the plating layer is formed with a thickness of about less than 1 µm. The oxide film is thin with respect to the thickness of the entire plating layer, and thus is often ignored from the main constituent of the plating layer.

The thickness of the entire plating layer is preferably 5 to 70 µm. Since the thickness of the entire plating layer depends on plating conditions, the thickness of the entire plating layer is not limited to the range of 5 to 70 µm. The thickness of the entire plating layer is affected by the viscosity and specific gravity of the plating bath in a normal hot-dip plating method. Then, the thickness of the entire plating layer is adjusted by the drawing speed of the steel material (steel sheet to be plated) and the intensity of the wiping.

The Al-Fe alloy layer is formed on the surface of the steel material (specifically, between the steel material and the Zn-Al-Mg alloy layer), and is a layer having an Al₅Fe₂ phase as a main phase in the microstructure. The Al-Fe alloy layer is formed by mutual atomic diffusion of a base metal (steel material) and a plating bath. When a hot-dip plating method is used as a manufacturing method, the Al-Fe alloy layer is easily formed in a plating layer containing an Al element. Since a certain concentration or more of Al is contained in the plating bath, the Al₅Fe₂ phase is formed most. However, the atomic diffusion takes time, and there is a portion where the Fe concentration is high in a portion close to the base metal. Therefore, a small amount of an AlFe phase, an Al₃Fe phase, an Al₂Fe phase, or the like may be contained in the part of the Al-Fe alloy layer. In addition, since a certain concentration of Zn is also contained in the plating bath, a small amount of Zn is also contained in the Al-Fe alloy layer.

When Si is contained in the plating layer, Si is particularly easily incorporated into the Al-Fe alloy layer, and an Al-Fe-Si intermetallic compound phase may be formed. The intermetallic compound phase to be identified is, for example, an AlFeSi phase, and α, β, q1, q2-AlFeSi phases and the like exist as isomers. Therefore, these AlFeSi phases and the like may be detected in the Al-Fe alloy layer. The Al-Fe alloy layer containing these AlFeSi phases and the like is also referred to as an Al-Fe-Si alloy layer.

Next, the average chemical composition of the plating layer will be described. When the plating layer has a single-layer structure of the Zn-Al-Mg alloy layer, the average chemical composition of the entire plating layer is the average chemical composition of the Zn-Al-Mg alloy layer. When the plating layer has a multi-layer structure of the Al-Fe alloy layer and the Zn-Al-Mg alloy layer, the average chemical composition of the entire plating layer is the average chemical composition of total of the Al-Fe alloy layer and the Zn-Al-Mg alloy layer.

**In** the hot-dip plating method, the chemical composition of the Zn-Al-Mg alloy layer is usually almost the same as that of the plating bath because the formation reaction of the plating layer is almost completed in the plating bath. In the hot-dip plating method, the Al-Fe alloy layer is instantaneously formed and grown immediately after immersion in the plating bath. The formation reaction of the Al-Fe alloy layer is completed in the plating bath, and the thickness of the Al-Fe alloy layer is often sufficiently smaller than that of the Zn-Al-Mg alloy layer. Therefore, unless a special heat treatment such as a heat alloying treatment is performed after plating, the average chemical composition of the entire plating layer is substantially equal to the chemical composition of the Zn-Al-Mg alloy layer, and the components of the Al-Fe alloy layer and the like can be ignored.

### Al: 10.0% or more and 40.0% or less

Similarly to Zn, Al is an element mainly constituting the plating layer. Although Al has a small sacrificial corrosion protection action, the inclusion of Al in the plating layer improves water wet corrosion resistance, water flow corrosion resistance, and corrosion resistance in a flat portion. In addition, when Al is not present, Mg cannot be stably held in the plating bath, so that Al is contained in the plating bath as an essential element in the manufacturing. The content of Al of 10.0% or more is a content required for containing a large amount of Mg described later, or a content required for securing corrosion resistance to some extent. When the content of Al is equal to or less than this content, it is difficult to form a plating bath and further, it is difficult to secure corrosion resistance. The reason why the content of Al is 40.0% or less is that Al has a weak sacrificial corrosion protection action on the steel sheet. When the content of Al is 40.0% or more, a sufficient sacrificial corrosion resistance cannot be obtained, so that the upper limit thereof is set to 40.0% or less.

### Mg: more than 4.0% and 8.5% or less

Mg is an element that has a sacrificial corrosion protection effect and enhances corrosion resistance of the plating layer. When a certain amount or more of Mg is contained in the plating layer, an MgZn₂ phase is formed in the plating layer. As the Mg content in the plating layer is high, more MgZn₂ phase is formed. The MgZn₂ phase is known to have a structure called a Laves phase, and the hardness thereof is known to be high. The content of Mg of more than 4.0% is a concentration required to exhibit corrosion resistance, and when the content of Mg is 4.0% or less, sufficient corrosion resistance cannot be obtained. In addition, the MgZn₂ phase is not sufficiently formed in the plating layer, and the corrosion resistance of the plating layer itself is low. When the content of Mg is excessive, it is difficult to manufacture the plating layer, and the processability of the plating layer is deteriorated, so that the upper limit thereof is 8.5% or less. The Mg content is more preferably 5.0% or more and 7.0% or less.

### Si: 0% to 5.0%

When Si is contained in the plating bath, a Si single phase or Mg₂Si is precipitated in the plating layer, and when Ca is further contained together with Si, an Al-Ca-Si compound is precipitated. Since Si is excellent in water wet corrosion resistance and water flow corrosion resistance, water wet corrosion resistance and water flow corrosion resistance can be further improved by precipitation of Si or the Si-based compound on the surface layer of the plating layer. Si is an optional additive element, and thus the content thereof may be 0%, but when Si is contained in an amount of 0.05% or more, water wet corrosion resistance and water flow corrosion resistance are further improved. However, when the content of Si exceeds 5.0%, generation of a large amount of dross and bare spots frequently occur. Therefore, the Si concentration may be 0 to 5.0%, 0.05% to 5.0%, 0.05% to less than 1.0%, or 0.10% to 0.50%.

### Ca: 0% to 3.00%

Ca is easily oxidized in the air, and when present in a plating bath, Ca forms a dense oxide film on the bath surface and has an effect of preventing oxidation of Mg. The above effect stabilizes the Mg concentration and facilitates the manufacturing of a plated steel sheet having a target composition. Ca is an optional additive element, and thus the content thereof may be 0%, but in order to suitably exhibit the above-described effect, the content of Ca is more than 0%, and more preferably 0.01% or more. When Ca is contained in an amount of 0.01% or more, an Al-Ca-Si-based compound or a Ca-Al-Zn-based compound is easily formed. Among these compounds, the Al-Ca-Si-based compound is excellent in water wet corrosion resistance and water flow corrosion resistance. Therefore, when these compounds are concentrated on the plating surface layer, water wet corrosion resistance and water flow corrosion resistance can be increased. The upper limit of the content of Ca is 3.00% or less.

### Element group A

Sn: 0% to 3.00%
Bi: 0% to 1.00%
In: 0% to 1.00%

The elements of the element group A have a function of improving sacrificial corrosion resistance. However, since these elements tend to be bonded to Mg stronger than Zn and the effect of Mg contained is reduced, there is an upper limit to the content of these elements. When the upper limit is exceeded, adhesion of dross or the like increases, and all of water wet corrosion resistance, water flow corrosion resistance, processability, and weldability tend to deteriorate. Therefore, the content of Sn is 0 to 3.00%, and more preferably more than 0 and less than 3.00%. The content of Bi is 0% to 1.00%, and more preferably more than 0 and less than 1.00%. The content of In is 0% to 1.00%, and more preferably more than 0 and less than 1.00%.

### Element group B

Y: 0% to 0.50%
La: 0% to 0.50%
Ce: 0% to 0.50%
Sr: 0% to 0.50%

Y, La, Ce, and Sr as the element group B are easily oxidized in the air, and when present in the plating bath, form a dense oxide film on the bath surface, and have an effect of preventing the oxidation of Mg. The above effect stabilizes the Mg concentration and facilitates the manufacturing of a plated steel sheet having a target composition. In order to suitably exhibit such an effect, the content of these elements is more than 0%, and more preferably 0.01% or more. **In** addition, there is an upper limit to the content of each element, and when the content exceeds the upper limit, it tends to be difficult to form a plating bath. In addition, adhesion of dross or the like increases, and water wet corrosion resistance and water flow corrosion resistance, processability, and weldability tend to deteriorate. Therefore, the content of each of Y, La, Ce, and Sr is 0% to 0.50%, preferably more than 0 and less than 0.50%, and more preferably 0.01% or more and less than 0.50%.

### Element group C

B: 0% to 1.00%
P: 0% to 0.50%

B and P as the element group C are elements belonging to a semimetal. These elements generally do not affect water wet corrosion resistance and water flow corrosion resistance, but there is an upper limit to the content of each element. When the content exceeds the upper limit, adhesion of dross or the like increases, and corrosion resistance tends to deteriorate. Therefore, the content of B is 0% to 1.0%, and the content of P is 0% to 0.50%.

### Element group D

Cr: 0% to 0.25%
Ti: 0% to 0.25%
V: 0% to 0.25%
Zr: 0% to 0.25%
Ni: 0% to 1.00%
Co: 0% to 0.25%
Nb: 0% to 0.25%
Cu: 0% to 1.00%
Mn: 0% to 0.25%
Mo: 0% to 0.25%
W: 0% to 0.25%
Ag: 0% to 1.00%
Li: 0% to 0.50%
Na: 0% to 0.05%
K: 0% to 0.05%
Fe: 0% to 5.00%

Cr, Ti, V, Zr, Ni, Co, Nb, Cu, Mn, Mo, W, Ag, Li, Na, K, and Fe as the element group D are metal elements. These elements are incorporated into the plating layer to form a substituted solid solution or a new intermetallic compound having a high melting point. This improves water wet corrosion resistance and water flow corrosion resistance. There is an upper limit to the content of each element, and when the content exceeds the upper limit, adhesion of dross or the like tends to increase. Therefore, the content of each of Na and K is 0% to 0.05%, and preferably more than 0% and less than 0.05%. The content of each of Cr, Ti, V, Zr, Co, Nb, Mn, Mo, and W is 0% to 0.25%, and preferably more than 0% and less than 0.25%. The content of Li is 0% to 0.50% or less, and preferably more than 0% and less than 0.50%. The content of each of Ni, Cu, and Ag is 0% to 1.00% or less, and preferably more than 0% and less than 1.00%. In addition, Fe may be inevitably contained in the plating layer. This is because there is a case where Fe is diffused from the base metal into the plating layer in the manufacturing of plating. Therefore, the content of Fe is 0% to 5.00% or less, and may be more than 0% and less than 5.00%.

### Element group E

Sb: 0% to 0.50%
Pb: 0% to 0.50%
Ba: 0% to 0.25%

Sb, Pb, and Ba as the element group E are elements having properties similar to those of Zn. Therefore, when these elements are contained, a special effect is hardly exhibited, but there are an effect that a spangle pattern is easily formed on the appearance of plating, and the like. However, when these elements are excessively contained, corrosion resistance may be deteriorated. Therefore, the content of each of Sb and Pb is 0% to 0.50%, and preferably more than 0% and less than 0.50%. The content of Ba is 0% to 0.25%, and preferably more than 0% and less than 0.25%.

### Remainder: Zn and impurities

Zn is a metal having a low melting point, and exists as a main phase of the plating layer on the steel material. Zn is an element necessary for securing corrosion resistance and obtaining a sacrificial corrosion protection action on the steel material. The content of Zn as the remainder is preferably 50.00% or more. When the content of Zn is less than 50.00%, the main constituent of the metallographic structure of the Zn-Al-Mg alloy layer becomes the Al phase, and the Zn phase exhibiting sacrificial corrosion resistance may be insufficient. The content of Zn is more preferably 65.00% or more or 70.00% or more. The upper limit of the Zn content is the amount of the remainder other than elements excluding Zn and impurities.

The impurity in the plating layer refers to a component that is contained in a raw material or mixed in a manufacturing process and not intentionally contained. For example, in the plating layer, a small amount of components other than Fe may be mixed as the impurity due to mutual atomic diffusion between the steel material (base metal) and the plating bath.

In order to identify the average chemical composition of the plating layer, an acid solution is obtained in which the plating layer is peeled off and dissolved with an acid containing an inhibitor that suppresses corrosion of the base metal (steel material). Next, the chemical composition can be obtained by measuring the obtained acid solution by ICP emission spectrometry or ICP-MS. The acid species is not particularly limited as long as it is an acid capable of dissolving the plating layer. If the area and weight before and after peeling are measured, the plating adhesion amount (g/m²) can also be obtained at the same time.

Next, the microstructural morphology of the plating layer will be described.

The proportion of the phases and microstructures contained in the plating layer greatly affects water wet corrosion resistance and water flow corrosion resistance of the plated steel material. Even in a plating layer having the same component composition, the phases or microstructures contained in the metallographic structure changes depending on the manufacturing method, and the properties thereof are different. The metallographic structure of the plating layer can be easily confirmed by a scanning electron microscope (SEM-EDS) with an energy dispersive X-ray analyzer. The state of the approximate metallographic structure of the plating layer can be confirmed by, for example, obtaining a reflected electron image in an arbitrary vertical cross section of a mirror-finished plating layer. The vertical cross section of the plating layer is a cross section in the thickness direction of the plating layer perpendicular to the surface of the steel material. Since the thickness of the plating layer of the present embodiment is 3 to 80 µm, and preferably 5 to 70 µm, it is preferable to confirm the metallographic structure in a visual field at a magnification of 500 to 5,000 times in the SEM. The reason why the lower limit of the thickness of the plating layer is set to 3 µm or more is that when the thickness is less than 3 µm, it may be difficult to secure corrosion resistance. The reason why the upper limit of the thickness of the plating layer is set to 80 µm is that when the thickness exceeds 80 µm, plating or the like may be peeled off when the plated steel material is processed, and such peeling may be impractical. For example, when a plating layer having a thickness of 25 µm is confirmed at a magnification of 2,000 times, a cross section of the plating layer in a region of 25 µm (plating thickness) × 40 µm (SEM field width) = 1,000 µm² can be confirmed per one visual field. In the case of the present embodiment, there is a possibility that a local visual field of the plating layer is observed in the visual field of the SEM. Therefore, in order to obtain average information of the plating layer, 25 visual fields may be selected from an arbitrary cross section and used as the average information. That is, the area fraction of the phases or microstructures constituting the metallographic structure of the plating layer may be determined by observing the metallographic structure in a visual field of 25,000 µm² in total.

The reflected electron image by a SEM is preferable in that the phases or microstructures contained in the plating layer can be easily determined. An element having a small atomic number such as Al is imaged in black, and an element having a large atomic number such as Zn is imaged in white, so that the proportion of these microstructures can be easily read.

In order to confirm each phase, the composition of the phase may be confirmed at pinpoint in the EDS analysis, and a phase having substantially equivalent components may be read from element mapping or the like to specify the phase. When EDS analysis can be used, a phase having almost the same composition can be discriminated by element mapping. If a phase having almost the same composition can be specified, the area of the crystal phase in the observed visual field can be grasped. If the area is grasped, the average grain size can be calculated by obtaining the equivalent circle diameter by calculation.

In addition, the area percentage of each phase in the observed visual field can be obtained. The area fraction of a specific phase in the plating layer corresponds to the volume percentage of the phase in the plating layer.

### Al phase

The Al phase in the present embodiment is a region where the Al content is more than 35 mass% in the plating layer. The Al phase may contain Zn, but the Zn content is less than 65%. The Al phase can be clearly distinguished from other phases and microstructures in the SEM reflected electron image. That is, the Al phase is often shown in the blackest color in the SEM reflected electron image. In the present embodiment, the Al phase has various forms such as a block shape or appears as a dendritic cross section such as a circular shape or a flat shape in an arbitrary cross section. **In** the present embodiment, Al contained in the [ternary eutectic structure of Al/MgZn₂/Zn] is not included in the Al phase. The Al phase is excellent in water wet corrosion resistance and water flow corrosion resistance. Al in the bath is precipitated as an Al phase, an Al-Zn phase and a Zn-Al phase to be described later, but is desirably precipitated as an Al phase because water wet corrosion resistance and water flow corrosion resistance are secured.

### Al-Zn phase

The Al-Zn phase in the present embodiment is a phase containing 65 to 75 mass% of Zn and Al. The Al-Zn phase is an aggregate of a fine Zn phase (hereinafter, referred to as a fine Zn phase) having a grain size of about 1 µm and a fine Al phase (hereinafter, referred to as a fine Al phase) having a grain size of less than 1 µm. In the plating layer in a molten state, Al has a structure different from the crystal structure at room temperature, a large amount of the Zn phase can be solid-solved therein, and Al exists as a high-temperature stable phase containing the Zn phase. On the other hand, at room temperature, the content of the Zn phase extremely decreases in this high-temperature stable phase, Al and Zn are equilibrium-separated, and Al exists as an Al-Zn phase including a fine Al phase and a fine Zn phase. That is, the Al-Zn phase is a phase containing 65 to 75 mass% of a fine Zn phase. The Al-Zn phase is a phase having a composition corresponding to the β phase in the Al-Zn phase diagram and has different properties from the Al phase and the Zn-Al phase contained in the plating layer, and thus is distinguished in a reflected electron SEM image and wide-angle X-ray diffraction. Therefore, in the present embodiment, a phase containing 25 to 35 mass% of an Al component and 65 to 75 mass% of a Zn component is defined as an Al-Zn phase.

In addition, the Al-Zn phase is inferior to the Al phase and the Zn-Al phase in water wet corrosion resistance and water flow corrosion resistance. Therefore, it is desirable that the Al-Zn phase is not crystallized as much as possible in order to ensure the water flow resistance of plating. Therefore, the relationship of the area fraction of the Al-Zn phase, the Al phase, and the Zn-Al phase in the microstructure needs to satisfy the following formula (A). $\left(\left[Al\right]+\left[Zn-Al\right]\right) / \left[Al-Zn\right] \geq 0.8$ (A)

In formula (A), [Al] is the area fraction (%) of the Al phase, [Zn-Al] is the area fraction (%) of the Zn-Al phase, and [Al-Zn] is the area fraction (%) of the Al-Zn phase.

### Zn-Al phase

The Zn-Al phase in the present embodiment is a phase containing 75 to 85 mass% of Zn and Al. The Zn-Al phase is an aggregate of a fine Zn phase (hereinafter, referred to as a fine Zn phase) having a grain size of about 1 µm and a fine Al phase having a grain size of less than 1 µm. The β phase, which is a high-temperature stable phase, separates into Zn and an Al phase at 250°C or lower, and at that time, takes in surrounding Zn to form a Zn-Al phase. The Zn-Al phase is inferior to the Al phase, but is superior to the Al-Zn phase in water wet corrosion resistance and water flow corrosion resistance. In addition, when the Al concentration in the plating bath is 15% or less, it is difficult to precipitate the Al phase. Thus, it is possible to improve water wet corrosion resistance and water flow corrosion resistance by controlling the precipitation of the Zn-Al phase.

In order to ensure sacrificial corrosion resistance while improving water wet corrosion resistance and water flow corrosion resistance, the total of the Al phase, the Al-Zn phase, and the Zn-Al phase needs to be 15% or more and 75% or less in the area fraction. All of the Al phase, the Al-Zn phase, and the Zn-Al phase are not necessarily crystallized, and any phase may be 0%.

### MgZn₂ phase

The MgZn₂ phase according to the present embodiment is a region where the content of Mg is 11 to 21 mass% and preferably 16 mass%, and the content of Zn is 81 to 89 mass% and preferably 84 mass% in the plating layer. The MgZn₂ phase is often photographed in gray having an intermediate color between the colors of Al and Zn in a reflected electron image of the SEM. In the reflected electron image of the SEM, the MgZn₂ phase can be clearly distinguished from the Al-Zn phase, the Al phase, [ternary eutectic structure of Al/MgZn₂/Zn], and the like.

The MgZn₂ phase has a higher sacrificial corrosion resistance than the Al phase, but is inferior in water wet corrosion resistance and water flow corrosion resistance. Therefore, from the viewpoint of sacrificial corrosion resistance, it is more preferable as the amount of the MgZn₂ phase increases. On the other hand, when the amount of the MgZn₂ phase increases, water wet corrosion resistance and water flow corrosion resistance decrease, and thus there is an upper limit to the area fraction of the MgZn₂ phase. The proportion of the MgZn₂ phase in the plating layer needs to be balanced between both characteristics, and therefore the area fraction of the MgZn₂ phase needs to be 10% or more and 50% or less.

### [Ternary eutectic structure of Al/MgZn₂/Zn]

The [ternary eutectic structure of Al/MgZn₂/Zn] is a eutectic structure including an Al phase, an MgZn₂ phase, and a Zn phase, and is clearly distinguished from the MgZn₂ phase contained as the main phase of the plating layer and the above-described Al phase in the reflected electron image of the SEM.

The presence of the [ternary eutectic structure of Al/MgZn₂/Zn] including the Zn phase to some extent makes it possible to secure sacrificial corrosion resistance and improve the corrosion resistance at the end surface. On the other hand, the presence of such a ternary eutectic structure reduces water wet corrosion resistance and water flow corrosion resistance. Therefore, the upper limit of the area fraction of the [ternary eutectic structure of Al/MgZn₂/Zn] is 65 area% or less, and preferably 40 area% or less, considering water wet corrosion resistance and water flow corrosion resistance. The lower limit of the area fraction of the [ternary eutectic structure of Al/MgZn₂/Zn] is not particularly limited, and may be 0%.

### Mg₂Si phase

When Si is contained in the plating layer, Si may be precipitated as a Mg₂Si phase. The Mg₂Si phase is excellent in water wet corrosion resistance and water flow corrosion resistance. Therefore, when the Mg₂Si phase is present on the surface layer, the Mg₂Si phase functions as a barrier layer against water, and has an effect of suppressing the consumption of the plating layer. Therefore, it is preferable to precipitate Mg₂Si on the surface layer.

The presence of Mg₂Si can be confirmed by X-ray diffraction measurement. In the X-ray diffraction measurement, the presence of Mg₂Si can be determined based on whether the diffraction peak of the Mg₂Si phase appears in the X-ray diffraction pattern of the surface of the plating layer, measured using Cu-Kα rays under the condition of an X-ray output of 50 kV and 300 mA. The X-ray diffractometer is not particularly limited, and for example, a sample horizontal strong X-ray diffractometer RINT-TTR III manufactured by Rigaku Corporation can be used.

The concentrating of Si in the surface layer of the plating layer can be confirmed by GDS (glow discharge optical emission spectrometry). In order to improve water wet corrosion resistance and water flow corrosion resistance, a Si compound is preferably present on the surface layer of the plating layer. Specifically, Si is preferably present in a range from the surface of the plating layer to a depth of 0.5 µm. Conversion in the depth direction by GDS may be performed based on the relationship between the number of seconds of sputtering of Zn and the depth. The amount of Si required to improve water wet corrosion resistance and water flow corrosion resistance can be grasped by comparing the intensity ratio with Al and Zn as main components. Specifically, when the integrated intensity value of an element X when GDS measurement is performed up to a depth of 0.5 µm from the surface of the plating layer is IΣ(X), it is preferable to satisfy the following formula (1). This further improves water wet corrosion resistance and water flow corrosion resistance.

The integrated intensity value of the element X in the present invention refers to the intensity in the plating layer, and does not include the integrated intensity values of the coating film and the chemical conversion coating. In order to confirm the GDS integrated intensity value of the plating layer of the plated steel material subjected to coating or chemical conversion treatment, measurement may be performed using GDS after removing the coating film or the chemical conversion coating, or both by chemical treatment, grinding, or the like. When it is difficult to remove the coating, the surface of the plating layer is defined from the result of the GDS measurement. Specifically, measurement is performed by GDS from the surface of the plated steel material to the steel material, and a position where all the element intensities of Zn, Al, and Mg, which are the main components of the plating layer of the present invention, first satisfy 1/3 or more of peak intensity values of respective elements is regarded as the surface layer of plating.

IΣ(Si), IΣ(Zn), and IΣ(Al) in the following formula (1) are the integrated intensity values of Si, Zn, and Al detected in a range from the surface of the plating layer to a depth of 0.5 µm by GDS, respectively.$IΣ \left(Si\right) / \left(IΣ\left(Zn\right)+IΣ\left(Al\right)\right) \geq 0.005$ (1)

The intensity of Si appears as a peak in a range from the surface of the plating layer to a depth of 0.5 µm and at an interface between the plating layer and the steel material. The peak intensity of Si on the surface layer side of the plating layer is five times or more the peak intensity of Si at the position of 1/2 of the thickness of the plating layer.

### Al-Ca-Si phase

When Ca and Si are contained in the plating bath, an Al-Ca-Si phase is precipitated as a Si compound in the plating layer. Specifically, Ca and Si are precipitated as a Ca₃Al₂Si₂ phase, a CaAl₂Si₂ phase, a CaAl₂Si₂ phase, or a CaAl₁₋ₓSi₁₊ₓ phase (where x is 0 to 0.2). The Al-Ca-Si phase is more excellent in water wet corrosion resistance and water flow corrosion resistance than the Mg₂Si phase described above. Therefore, when the Al-Ca-Si phase exists in a range from the surface of the plating layer to a depth of 0.5 µm, the Al-Ca-Si phase functions as a barrier layer against water, and has an effect of suppressing consumption of the plating layer. More specifically, it is preferable to satisfy the following formula (2).

IΣ(Ca) and IΣ(Si) in the following formula (2) are the integrated intensity values of Ca and Si detected in a range from the surface of the plating layer to a depth of 0.5 µm by GDS, respectively.$IΣ \left(Ca\right) / IΣ \left(Si\right) \geq 2.0$ (2)

The above phases and microstructures constitute the main phase of the plating layer, and these constitute 90% or more in terms of area fraction of the plating layer. Meanwhile, when elements other than Zn, Mg, and Al are contained in the plating layer, other metal phases are formed. Some of these metal phases have effects on improvement in water wet resistance, water flow resistance, and corrosion resistance, but the effects thereof are not remarkable. From the composition of the plating layer, it is difficult to make the remainder of these metal phases more than 5.0 area% in total, so that the remainder is 5.0 area% or less. The remainder may be 0%.

In the method for measuring the area fraction of the phases and microstructures in the plating layer, as described above, the cross section in the thickness direction of the plating layer perpendicular to the surface of the steel material is exposed, and the metallographic structure thereof is confirmed in a visual field at a magnification of 500 to 5,000 times. Twenty five visual fields are selected from an arbitrary cross section and used as average information. That is, the area fraction of the phases or microstructures constituting the metallographic structure of the plating layer is determined by observing the metallographic structure in a visual field of 25,000 µm² in total. In order to confirm each phase, the composition of the phase is confirmed at pinpoint in the EDS analysis, and a phase having substantially equivalent components is read from element mapping or the like to specify the phase. When EDS analysis can be used, a phase having almost the same composition can be discriminated by element mapping. If a phase having almost the same composition can be specified, the area of the crystal phase in the observed visual field can be grasped. If the area is grasped, the average grain size can be calculated by obtaining the equivalent circle diameter by calculation, and the area percentage of each phase in the observed visual field can be obtained.

When component analysis in the depth direction inside the plating layer is performed by GDS analysis, a glow discharge optical emission spectrometer (GDS) is used. For example, LECO Japan 850A may be used as the glow discharge optical emission spectrometer, but the measuring apparatus is not limited thereto. The analysis conditions in the case of performing analysis in the depth direction by argon sputtering are argon pressure: 0.27 MPa, output power: 30 W, output voltage: 1,000 V, and discharge region: in a circular region having a diameter of 4 mm. In the measurement, the integrated value of the emission intensity of each element is obtained by GDS analysis in which analysis is performed while etching is performed from the surface of the plating layer toward the depth direction to a depth of 0.5 µm. Based on the integrated value, it is determined whether the conditions (1) and (2) are satisfied.

The presence of the Al-Ca-Si phase (Ca₃Al₂Si₂ phase, CaAl₂Si₂ phase, CaAl₂Si₂ phase, CaAl₁₋ₓSi₁₊ₓ phase) can be confirmed by X-ray diffraction measurement in addition to SEM and ESD measurement. In the X-ray diffraction measurement, the presence of the Al-Ca-Si phase can be confirmed based on whether the diffraction peak of the Al-Ca-Si phase appears in the X-ray diffraction pattern of the surface of the plating layer, measured using Cu-Kα rays under the conditions of an X-ray output of 50 kV and 300 mA. The X-ray diffractometer is not particularly limited, and may be, for example, a sample horizontal strong X-ray diffractometer RINT-TTR III manufactured by Rigaku Corporation, but is not limited thereto.

The presence of Mg₂Si can be confirmed by X-ray diffraction measurement in addition to SEM and ESD measurement. In the X-ray diffraction measurement, a Cu-Kα ray is used, and the measurement is performed under the conditions of an X-ray output of 50 kV and 300 mA. The presence of Mg₂Si can be confirmed based on whether the diffraction peak of the Mg₂Si phase appears in the X-ray diffraction pattern of the surface of the plating layer. The X-ray diffractometer may be, for example, a sample horizontal strong X-ray diffractometer RINT-TTR III manufactured by Rigaku Corporation, but is not limited thereto.

Next, the manufacturing method of the plated steel material according to an embodiment of the present invention will be described. The plated steel material of the present embodiment can be manufactured by either an immersion type hot-dip plating method (batch type hot-dip plating method) or a continuous type hot-dip plating method.

The size, shape, surface morphology, and the like of the steel material to be plated are not particularly limited. Ordinary steel materials, high tensile strength steel, stainless steel, and the like are applicable as long as they are steel materials. More specifically, for example, various steel materials, such as general steel, Ni pre-plated steel, Al-killed steel, ultra-low carbon steel, high carbon steel, various high tensile strength steels, and some high alloy steels (a steel containing a reinforcing element such as Ni, Cr, etc.) are applicable. Steel strips of general structural steel are most preferred.

The surface of the steel material may be finished by shot blasting, brush grinding, or the like in advance. There is no problem even if plating is performed after a metal film or an alloy film of Ni plating, Zn plating, Sn plating, or the like is adhered in an adhesion amount of 3 g/m² or less to the surface. In addition, as a pretreatment of the steel material, it is preferable to sufficiently clean the steel material by degreasing and pickling.

After the surface of the steel material is sufficiently heated and reduced with a reducing gas such as H₂, the steel material is immersed in a plating bath prepared to have predetermined components. In high tensile strength steel and the like, it is common to humidify the atmosphere during annealing and utilize an internal oxidation method and the like to thereby secure plating adhesion of high Si, Mn steel and the like. By performing such a treatment, a plated steel material with less bare spots and fewer appearance defects can be usually plated in the same manner as general steel materials. In such a steel material, a surface of a steel material having a fine crystal grain size and an internal oxide film layer are observed on the base metal side, but they do not affect the performance of the present invention.

In the case of the hot-dip plating method, the components of the plating layer can be controlled by the components of the plating bath to be prepared. The plating bath is prepared by mixing predetermined amounts of pure metals, and for example, an alloy of plating bath components is prepared by a dissolution method under an inert atmosphere.

By immersing a steel material whose surface has been reduced in a plating bath maintained at a predetermined concentration, a plating layer having substantially the same components as that of the plating bath is formed. When the immersion time is prolonged or it takes a long time to complete the solidification, the formation of the interface alloy layer becomes active, so that the Fe concentration may increase. When the temperature is lower than 500°C, the reaction with the plating layer rapidly slows down, so that the concentration of Fe contained in the plating layer usually falls below 5.00%.

In order to form a hot-dip plating layer, it is preferable to keep the plating bath at 450°C to 550°C. Then, it is preferable to immerse the reduced steel material for several seconds. On the surface of the reduced steel material, Fe may diffuse into the plating bath and react with the plating bath to form an interface alloy layer (mainly an Al-Fe alloy layer) at the interface between the plating layer and the steel material. When the interface alloy layer is formed, the steel material below the interface alloy layer and the plating layer above the interface alloy layer are metal-chemically bonded more firmly.

After the steel material is immersed in the plating bath for a predetermined time, the steel material is pulled up from the plating bath. When the metal adhered to the surface is in a molten state, N₂ wiping is performed, whereby the thickness of the plating layer is adjusted to a predetermined thickness. The thickness of the plating layer is preferably adjusted to 3 to 80 µm. When the above thickness is converted into the adhesion amount of the plating layer, the adhesion amount is 10 to 500 g/m² (one surface). The thickness of the plating layer may also be adjusted to 5 to 70 µm. When the above thickness is converted into the adhesion amount of the plating layer, the adhesion amount is about 20 to 400 g/m² (one surface).

After adjusting the adhesion amount of the plating layer, the adhered molten metal is solidified. Cooling in the solidification of the molten metal may be performed by blowing nitrogen, air, or a mixed gas of hydrogen and helium, or mist cooling, or immersion in water. Mist cooling is preferable, and mist cooling in which water is contained in nitrogen is preferable. The cooling rate may be adjusted by the content of water in the mist.

When cooling is performed under normal plating solidification conditions, for example, at an average cooling rate of 5 to 20 °C/sec between the plating bath temperature and 150°C, the microstructure cannot be controlled in some cases, and it may be difficult to satisfy predetermined performance. Therefore, cooling conditions that enable the plating layer of the present embodiment to be obtained will be described below. As described below, it is preferable to adjust the average cooling rate for each temperature range under the present cooling conditions.

### Average cooling rate between bath temperature and 380°C: 10 °C/sec to 20 °C/sec

Between the bath temperature and 380°C, the Si compound precipitates when Si is contained. When the cooling rate is high, solidification of plating proceeds without sufficient precipitation of Si, and Si tends to be uniformly dispersed in the plating layer. On the other hand, when the cooling rate is low, the Si compound tends to be coarsened and concentrated at the interface between the plating layer and the steel material, and the Si compound precipitated on the surface layer of the plating layer tends to be reduced. Therefore, in order to precipitate the Si compound on the surface layer, it is necessary to set the average cooling rate between the bath temperature and 380°C to 10 °C/sec to 20 °C/sec. Even when the plating layer does not contain Si, the average cooling rate between the bath temperature and 380°C may be set to 10 °C/sec to 20 °C/sec. A preferable lower limit of the average cooling rate is 15 °C/sec, and a preferable upper limit is 20 °C/sec. By setting the average cooling rate to a preferable lower limit or more, the Si compound tends to be concentrated on the surface, and the MgZn₂ microstructure is refined, so that the effect of improving processability is obtained. By setting the average cooling rate to a preferable upper limit or less, the Si compound tends to be concentrated on the surface, and the precipitation of Mg₂Zn₁₁ precipitated when the degree of supercooling is large is suppressed, so that the effect of improving the processability is obtained.

### Average cooling rate between 380°C and 250°C: 20 °C/sec or more

Between 380°C and 250°C, the Al phase is precipitated from the liquid phase of the molten metal adhered to the steel material, the ternary eutectic reaction of the Zn-Al-MgZn₂ phase occurs, and finally the liquid phase disappears and the plating layer is completely solidified. In the temperature range between 400°C and 300°C, the Al phase is transformed into the Al-Zn phase which is a high-temperature stable phase. That is, the Zn phase formed as [ternary eutectic structure of Al/MgZn₂/Zn] is absorbed in the precipitated Al phase, and the [ternary eutectic structure of Al/MgZn₂/Zn] decreases. In order to improve water wet corrosion resistance and water flow corrosion resistance, the average cooling rate between 380°C and 250°C is set to at least 20 °C/sec or more. More preferably, the average cooling rate is set to 30 °C/sec or more. By setting the average cooling rate to 30 °C/sec or more, the area percentage of the Al phase tends to increase. That is, the average cooling rate between 380°C and 250°C is preferably higher than the average cooling rate between the bath temperature and 380°C. The upper limit of the average cooling rate is not particularly limited, but may be, for example, 50/sec.

### Average cooling rate between 250°C and 150°C: 20 °C/sec or less

The Al-Zn phase is unstable in a temperature range of 250°C to 150°C, and is separated into the Zn phase and the Al phase. That is, the Al-Zn phase is transformed into the Al phase or the Zn-Al phase. Therefore, in order to improve the water wet corrosion resistance and the water flow corrosion resistance, it is preferable to slowly cool in this temperature range to promote the precipitation of the Al phase. Therefore, the cooling rate between 250 to 150°C is set to 20 °C/sec or less. As a result, the Al-Zn phase is separated into the Al phase and the Zn phase, and is transformed into the Al phase or the Zn-Al phase. In particular, when the Al concentration is high, the tendency of this transformation is strong. The average cooling rate is more preferably 10 °C/sec or less, and more preferably less than 5 °C/sec. By setting the average cooling rate to 10 °C/sec or less, the area percentage of the Al-Zn phase is reduced, and good water wet corrosion resistance and water flow corrosion resistance can be stably obtained. The lower limit of the average cooling rate is not particularly limited, but may be 2.5 °C/sec. When the average cooling rate is less than 2.5°C, the MgZn₂ phase in the microstructure of the plating tends to be coarsened and the processability tends to be deteriorated.

### Average cooling rate in temperature range of lower than 150°C

The average cooling rate in a temperature range of lower than 150°C in the solidification process does not affect the constituent phase in the plating layer, and thus is not particularly limited, and natural cooling may be employed.

The plating layer of the present embodiment is formed through the above cooling conditions.

After cooling the plating layer, various chemical conversion treatments and coating treatments may be performed. In addition, in order to further enhance the corrosion resistance, repair touch-up paint application, thermal spraying treatment, and the like may be performed in a welded portion, a processed portion, and the like.

In the plated steel material of the present embodiment, a film may be formed on the plating layer. A film composed of a single layer or two or more layers may be formed. Examples of the type of the film immediately above the plating layer include a chromate film, a phosphate film, and a chromate-free film. The chromate treatment, the phosphating treatment, and the chromate-free treatment for forming these films can be performed by known methods. It is noted that many chromate treatments may deteriorate weldability on the surface of the plating layer. Therefore, the thickness of the film is preferably less than 1 µm.

The chromate treatment includes an electrolytic chromate treatment in which a chromate film is formed by electrolysis, a reaction type chromate treatment in which a film is formed by utilizing a reaction with a material and then an excess treatment liquid is washed away, and an application type chromate treatment in which a film is formed by applying a treatment liquid to an object to be coated and drying the treatment liquid without washing with water. Any treatment may be adopted.

Examples of the electrolytic chromate treatment include electrolytic chromate treatments using chromic acid, a silica sol, a resin (phosphate, acrylic resin, vinyl ester resin, vinyl acetate acrylic emulsion, carboxylated styrene-butadiene latex, diisopropanolamine-modified epoxy resin, and the like), and hard silica.

Examples of the phosphating treatment include zinc phosphate treatment, zinc calcium phosphate treatment, and manganese phosphate treatment.

The chromate-free treatment which does not impose a burden on the environment is particularly suitable. The chromate-free treatment includes an electrolytic chromate-free treatment in which a chromate-free film is formed by electrolysis, a reaction type chromate-free treatment in which a film is formed by utilizing a reaction with a material and then an excess treatment liquid is washed away, and an application type chromate-free treatment in which a film is formed by applying a treatment liquid to an object to be coated and drying the treatment liquid without washing with water. Any treatment may be adopted.

Further, an organic resin film composed of a single layer or two or more layers may be provided on the film immediately above the plating layer. The organic resin is not limited to a specific type, and examples thereof include polyester resins, polyurethane resins, epoxy resins, acrylic resins, polyolefin resins, and modified products of these resins. Here, the modified product refers to a resin obtained by reacting a reactive functional group included in the structure of these resins with another compound (a monomer, a crosslinking agent, or the like) having a functional group capable of reacting with the functional group in the structure.

As such an organic resin, one type or two or more types of organic resins (unmodified organic resins) may be mixed and used, or one type or two or more types of organic resins obtained by modifying, in the presence of at least one type of organic resin, at least one type of another organic resin may be mixed and used. The organic resin film may contain any coloring pigment or rust preventive pigment. It is also possible to use a water-based pigment prepared by dissolving or dispersing these pigments in water.

### [Examples]

The steel sheet of the plated steel material was cut out in a size of 180 mm × 100 mm from cold-rolled steel sheets having a thickness (t) of 3.2 mm and a thickness (t) of 0.8 mm. The steel sheets were SS400 (general steel). A batch type hot-dip plating simulator (manufactured by RHESCA Co., Ltd.) was used. A K thermocouple was attached to a part of the steel sheet, and the sheet surface was sufficiently reduced by annealing at 800°C in a reducing atmosphere of N₂ containing 5% of H₂. The steel sheet was immersed in a plating bath having various compositions for 3 seconds and then pulled up, and the plating thickness was adjusted to be 10 to 30 µm by N₂ gas wiping. In Examples 55 to 58, the plating thicknesses were 3 µm, 5 µm, 70 µm, and 80 µm. The plating thicknesses of the front and back surfaces of the steel sheet were the same. After the steel material is pulled up from the plating bath, plated steel materials were manufactured under various cooling conditions of the following A to F.

The average chemical composition of the plating layer was measured as follows. An acid solution was obtained in which the plating layer was peeled off and dissolved with an acid containing an inhibitor that suppresses corrosion of base metal (steel material). Next, the average chemical composition of the plating layer was obtained by measuring the obtained acid solution by ICP emission spectrometry or ICP-MS.

Condition A: After the steel material was pulled up from the plating bath, the average cooling rate between the bath temperature and 150°C was set to any value of less than 5 °C/sec (comparative condition).

Condition B: After the steel material was pulled up from the plating bath, the average cooling rate between the bath temperature and 150°C was set to any value of 5 to 20 °C/sec (comparative condition).

Condition C: After the steel material was pulled up from the plating bath, the average cooling rate between the bath temperature and 150°C was set to any value of 20 °C/sec or more (comparative conditions).

Condition D: After the steel material was pulled up from the plating bath, the average cooling rate between the bath temperature and 380°C (range T1) was set to any value of 10 °C/sec to 20 °C/sec, the average cooling rate between 380°C and 250°C (range T2) was set to any value of 20 °C/sec to 50 °C/sec, and the average cooling rate between 250°C and 150°C (range T3) was set to any value of less than 5 °C/sec (preferable condition). Therefore, under the condition D, the average cooling rate was adjusted for each temperature range.

Condition D-2: After the steel material was pulled up from the plating bath, the average cooling rate between the bath temperature and 380°C (range T1) was set to any value of 10 °C/sec to 20 °C/sec, the average cooling rate between 380°C and 250°C (range T2) was set to any value of 20 °C/sec to 50 °C/sec, and the average cooling rate between 250°C and 150°C (range T3) was set to any value of 10 °C/sec or less. Therefore, under the condition D-2, the average cooling rate was adjusted for each temperature range.

Condition E: After the steel material was pulled up from the plating bath, the average cooling rate between the bath temperature and 380°C (range T1) was set to any value of less than 10 °C/sec, the average cooling rate between 380°C and 250°C (range T2) was set to any value of more than 20 °C/sec to 50 °C/sec, and the average cooling rate between 250°C and 150°C (range T3) was set to any value of less than 5 °C/sec (comparative condition). Therefore, under the condition E, the average cooling rate was adjusted for each temperature range.

Condition F: After the steel material was pulled up from the plating bath, the average cooling rate between the bath temperature and 380°C (range T1) was set to any value of 20 °C/sec or more, the average cooling rate between 380°C and 250°C (range T2) was set to any value of less than 20 °C/sec, and the average cooling rate between 250°C and 150°C (range T3) was set to any value of 5 °C/sec or more (comparative condition). Therefore, under the condition F, the average cooling rate was adjusted for each temperature range.

In the method for measuring the area fraction of the phases and microstructures (MgZn₂ phase, Al-containing phases, [ternary eutectic structure of Al/MgZn₂/Zn], Mg₂Si phase, Al-Ca-Si phase, remainder) in the plating layer, as described above, the cross section in the thickness direction of the plating layer perpendicular to the surface of the steel material was exposed, and the metallographic structure thereof was confirmed in a visual field at a magnification of 500 to 5,000 times. Specifically, the area fraction of the phases or microstructures constituting the metallographic structure of the plating layer was determined by observing the metallographic structure in a visual field of 25,000 µm² in total. In order to confirm each phase, the composition of the phase was confirmed at pinpoint in the EDS analysis, and a phase having substantially equivalent components was read from element mapping or the like to specify the phase. A phase having almost the same composition could be discriminated by element mapping.

The presence of Mg₂Si was also confirmed by X-ray diffraction measurement. In the X-ray diffraction measurement, the presence of Mg₂Si was determined based on whether the diffraction peak of the Mg₂Si phase appears in the X-ray diffraction pattern of the surface of the plating layer, measured using Cu-Kα rays under the condition of an X-ray output of 50 kV and 300 mA. As the X-ray diffractometer, a sample horizontal strong X-ray diffractometer RINT-TTR III manufactured by Rigaku Corporation was used.

IΣ(Si)/(IΣ(Zn) + IΣ(Al)) and IΣ(Ca)/IΣ(Si) were measured by performing GDS analysis on the plating layer in the depth direction. Specifically, analysis conditions in the case of performing analysis in the depth direction by argon sputtering were argon pressure: 0.27 MPa, output power: 30 W, output voltage: 1,000 V, and discharge region: in a circular region having a diameter of 4 mm. The integrated intensity values of Si, Zn and Al when GDS measurement was performed while etching was performed up to a depth of 0.5 µm from the surface of the plating layer were obtained, and IΣ(Si)/(1Σ(Zn) + IΣ(Al)) and IΣ(Ca)/IΣ(Si) were calculated.

The presence of the Al-Ca-Si phase (Ca₃Al₂Si₂ phase, CaAl₂Si₂ phase, CaAl₂Si₂ phase, CaAl₁₋ₓSi₁₊ₓ phase) was confirmed by X-ray diffraction measurement. In the X-ray diffraction measurement, the presence of the Al-Ca-Si phase was determined based on whether the diffraction peak of the Al-Ca-Si phase appears in the X-ray diffraction pattern of the surface of the plating layer, measured using Cu-Kα rays under the condition of an X-ray output of 50 kV and 300 mA. As the X-ray diffractometer, a sample horizontal strong X-ray diffractometer RINT-TTR III manufactured by Rigaku Corporation was used.

### (Evaluation of sacrificial corrosion resistance)

A sample material having a sheet thickness (t) of 3.2 mm was cut into 120 mm × 50 mm, one end surface in contact with the frame was coated, and the other cut end surfaces were not cured, and a test of JASO M609 was performed to evaluate sacrificial corrosion resistance. In the combined cycle test, generation of the red rust on the flat surface was confirmed. Red rust was generated at a red rust area fraction of 5% or more.

The sacrificial corrosion resistance was evaluated as follows. "B" was regarded as fail, and "A" to "S" were regarded as pass.

Generation of red rust was observed in less than 200 cycles: "B"
Red rust was generated in 200 cycles: "A"
Red rust was generated in less than 200 to 350 cycles: "AA"
Red rust was generated in less than 350 to 500 cycles: "AAA"
Red rust was not generated in 500 cycles: "S"

### (Evaluation of water wet corrosion resistance and water flow corrosion resistance)

A sample material having a sheet thickness (t) of 0.8 mm was cut into 120 mm × 60 mm, and a vinyl plate was attached to the cut sample material to form a flow path having a width of 20 mm and a length of 100 mm, thereby preparing a sample. The sample was set at an inclination of 15° with respect to the horizontal, and artificial rainwater (adjusted to have concentrations of Cl⁻: 10 ppm, SO₄²⁻: 40 ppm, NO₃⁻: 20 ppm, and further adjusted to have a pH of 5 by addition of an aqueous NaOH solution) was intermittently dropped at 6 ml/min onto the sample through a droplet nozzle from the upstream of the flow path. Droplets were adjusted to 100 to 200 µl per run. A case where red rust was observed in 5% or more of the area of the flow path was defined as generation of red rust, and the period until generation of red rust was evaluated as follows. As to the pass or fail of water wet corrosion, the following "B" was regarded as fail, and "A" to "S" were regarded as pass.

Red rust was generated in less than 8 weeks: "B"
Red rust was generated in less than 8 weeks to 12 weeks: "A"
Red rust was generated in less than 12 weeks to 14 weeks: "AA"
Red rust was generated in less than 14 weeks to 16 weeks: "AAA"
Red rust was not generated for 16 weeks or more: "S"

### (Evaluation of processability)

A sample material having a sheet thickness (t) of 0.8 mm was cut into 30 mm × 100 mm, and the cut test material was subjected to 2t180° bending (test in which a test material is subjected to 180° bending with a spacer having a size two times the sheet thickness sandwiched between bent surfaces). Then, the test material was unbent to be flattened, and subjected to a CELLOTAPE (registered trademark) peeling test at an inner bent portion. After the peeling test, the peeled area of the plating in the inner bent surface was measured. A region within 3 mm from the vertex of the bent portion in the inner bent surface, that is, an area of 30 mm × 6 mm was defined as the inner bent portion. The processability was evaluated based on the area percentage of the plating peeled area in the inner bent portion. In the processability evaluation, the following "B" was regarded as fail, and "A" to "S" were regarded as pass.

Peeled area is more than 10%: "B"
Peeled area is more than 5% and 10% or less: "A"
Peeled area is 5% or less: "AA"
There is no peeling: "S"

As shown in Tables 1A to 5B, Nos. 4 to 25, 27, 28, 30, 32, 33, 35 to 37, 39, 40, 43 to 45, 47, 48, and 53 to 58 (all Examples) were manufactured under the suitable cooling conditions of the present invention, the average chemical composition of the plating layer was within the appropriate range, and the area fraction of the phases and microstructures of the plating layer was within the appropriate range. As a result, sacrificial corrosion resistance, water wet corrosion resistance, water flow corrosion resistance, and processability were excellent. The Zn content in each of the plating layers of Examples was 50% or more.

In Nos. 1 to 3 (Comparative Examples), the Al content and the Mg content were small, and the area fraction of the MgZn₂ phase and [ternary eutectic structure of Al/MgZn₂/Zn] was out of the appropriate range. **In** addition, the manufacturing conditions were out of the preferable range. As a result, sacrificial corrosion resistance, water wet corrosion resistance, water flow corrosion resistance, and processability were deteriorated.

In No. 26 (Comparative Example), the Mg content was small, and the area fraction of the MgZn₂ phase was out of the appropriate range. As a result, sacrificial corrosion resistance, water wet corrosion resistance, water flow corrosion resistance, and processability were deteriorated.

In No. 29 (Comparative Example), the Sn content was excessive. As a result, sacrificial corrosion resistance, water wet corrosion resistance, water flow corrosion resistance, and processability were deteriorated.

In No. 31 (Comparative Example), the Bi content was excessive. As a result, sacrificial corrosion resistance, water wet corrosion resistance, water flow corrosion resistance, and processability were deteriorated.

In No. 34 (Comparative Example), the **In** content was excessive. In addition, the manufacturing conditions were out of the preferable range. Further, ([Al] + [Zn - Al])/[Al - Zn] was less than 0.8. As a result, sacrificial corrosion resistance, water wet corrosion resistance, water flow corrosion resistance, and processability were deteriorated.

In No. 38 (Comparative Example), the La content and the Ce content were excessive. In addition, the manufacturing conditions were out of the preferable range. Further, ([Al] + [Zn - Al])/[Al - Zn) was less than 0.8. As a result, sacrificial corrosion resistance, water wet corrosion resistance, water flow corrosion resistance, and processability were deteriorated.

In No. 41 (Comparative Example), the Sr content was excessive. In addition, the manufacturing conditions were out of the preferable range. As a result, sacrificial corrosion resistance, water wet corrosion resistance, water flow corrosion resistance, and processability were deteriorated.

In No. 42 (Comparative Example), the Mg content was excessive. Further, the area fraction of the MgZn₂ phase was out of the appropriate range. As a result, sacrificial corrosion resistance, water wet corrosion resistance, water flow corrosion resistance, and processability were deteriorated.

In No. 46 (Comparative Example), the P content was excessive. As a result, sacrificial corrosion resistance, water wet corrosion resistance, water flow corrosion resistance, and processability were deteriorated.

In No. 49 (Comparative Example), the Al content and the Ca content were excessive. In addition, the manufacturing conditions were out of the preferable range. Further, ([Al] + [Zn - Al])/[Al - Zn] was less than 0.8. As a result, sacrificial corrosion resistance, water wet corrosion resistance, water flow corrosion resistance, and processability were deteriorated.

In No. 50 (Comparative Example), the Al content and the Mg content were excessive. In addition, the manufacturing conditions were out of the preferable range. As a result, sacrificial corrosion resistance, water wet corrosion resistance, water flow corrosion resistance, and processability were deteriorated.

In No. 51 (Comparative Example), the Al content was excessive. As a result, sacrificial corrosion resistance, water wet corrosion resistance, water flow corrosion resistance, and processability were deteriorated.

In No. 52 (Comparative Example), the Al content was excessive. **In** addition, the manufacturing conditions were out of the preferable range. Further, the total content of the Al phase, the Al-Zn phase, and the Zn-Al phase exceeded 75%. As a result, sacrificial corrosion resistance, water wet corrosion resistance, water flow corrosion resistance, and processability were deteriorated.

**[Table 1A]**

| No. | Item | Bath temperature (°C) | Manufacturing method classification | Average cooling rate (°C/sec) | | | Average chemical composition of plating layer (mass%) remainder: Zn and impurities | | | | | | | | | | | | |
|---|---|---|---|---|---|---|---|---|---|---|---|---|---|---|---|---|---|---|---|
| | | | | | | | Al | Mg | Si | Ca | Element group A | | | Element group B | | | | Element group C | |
| | | | | T1 | T2 | T3 | | | | | Sn | Bi | In | Y | La | Ce | Sr | B | P |
| 1 | Comparative Example | 500 | A | 1.5 | 1.5 | 1.5 | 4.0 | 2.0 | 0 | 0 | 0 | 0 | 0 | 0 | 0 | 0 | 0 | 0 | 0 |
| 2 | Comparative Example | 500 | A | 4 | 4 | 4 | 6.0 | 3.5 | 0 | 0 | 0 | 0 | 0 | 0 | 0 | 0 | 0 | 0 | 0 |
| 3 | Comparative Example | 500 | B | 20 | 20 | 20 | 9.0 | 4.0 | 0.01 | 0.01 | 0.01 | 0.01 | 0 | 0 | 0 | 0 | 0 | 0 | 0 |
| 4 | Example | 500 | D | 10 | 25 | 4 | 10.0 | 4.5 | 0.10 | 0.10 | 0.05 | 0.05 | 0.05 | 0 | 0 | 0 | 0 | 0 | 0 |
| 5 | Example | 500 | D | 10 | 25 | 4 | 10.0 | 4.5 | 0 | 0.10 | 0.05 | 0 | 0.05 | 0 | 0 | 0 | 0 | 0 | 0 |
| 6 | Example | 500 | D | 12.5 | 20 | 4 | 10.0 | 5.0 | 0.05 | 0.10 | 0.10 | 0 | 0 | 0 | 0 | 0 | 0 | 0.05 | 0 |
| 7 | Example | 500 | D | 12.5 | 30 | 4 | 10.0 | 6.0 | 0.30 | 0.20 | 0.20 | 0 | 0 | 0 | 0 | 0 | 0 | 0.02 | 0 |
| 8 | Example | 500 | D | 15 | 30 | 4 | 10.0 | 6.0 | 0.40 | 0.40 | 0.40 | 0 | 0 | 0 | 0 | 0 | 0 | 0 | 0 |
| 9 | Example | 500 | D | 10 | 30 | 4 | 10.0 | 6.0 | 0.20 | 0.30 | 0.50 | 0 | 0 | 0 | 0 | 0 | 0 | 0 | 0 |
| 10 | Example | 500 | D | 10 | 25 | 2 | 10.0 | 8.0 | 0.20 | 0.30 | 0.50 | 0 | 0 | 0 | 0 | 0 | 0 | 0 | 0 |
| 11 | Example | 500 | D | 10 | 30 | 4 | 10.0 | 8.0 | 0.20 | 0.30 | 0.50 | 0 | 0 | 0 | 0 | 0 | 0 | 0 | 0 |
| 12 | Example | 500 | D | 12.5 | 25 | 2 | 10.0 | 8.5 | 0.20 | 0.30 | 0.50 | 0 | 0 | 0 | 0 | 0 | 0 | 0 | 0 |
| 13 | Example | 500 | D | 12.5 | 25 | 2 | 12.5 | 8.0 | 0.20 | 0.30 | 0.50 | 0 | 0 | 0 | 0 | 0 | 0 | 0 | 0 |
| 14 | Example | 500 | D | 12.5 | 30 | 3 | 12.5 | 5.0 | 0 | 0.50 | 0 | 0 | 0 | 0 | 0 | 0 | 0 | 0 | 0 |
| 15 | Example | 500 | D | 15 | 30 | 4 | 12.5 | 5.0 | 0.40 | 0.20 | 0 | 0 | 0 | 0 | 0 | 0 | 0 | 0 | 0 |
| 16 | Example | 500 | D | 10 | 30 | 4 | 12.5 | 6.0 | 0.30 | 0.20 | 0 | 0 | 0 | 0 | 0 | 0 | 0 | 0 | 0 |
| 17 | Example | 500 | D | 12.5 | 30 | 4 | 15.0 | 6.0 | 0.30 | 0.20 | 0 | 0 | 0 | 0 | 0 | 0 | 0 | 0 | 0 |
| 18 | Example | 500 | D | 10 | 30 | 3 | 15.0 | 8.0 | 0.30 | 0.20 | 0 | 0 | 0 | 0 | 0 | 0 | 0 | 0 | 0 |
| 19 | Example | 550 | D | 17.5 | 25 | 2 | 15.0 | 8.0 | 0.60 | 0.60 | 0 | 0 | 0 | 0 | 0 | 0 | 0 | 0 | 0 |

| | | | | | | | | | | | | | | | | | | | |
|---|---|---|---|---|---|---|---|---|---|---|---|---|---|---|---|---|---|---|---|
| The underline indicates that the value is out of the range of the present invention or out of the range of preferred manufacturing conditions. | | | | | | | | | | | | | | | | | | | |

**[Table 1B]**

| No. | Item | Bath temperature (°C) | Manufacturing method classification | Average cooling rate (°C/sec) | | | Average chemical composition of plating layer (mass%) remainder: Zn and impurities | | | | | | | | | | | | |
|---|---|---|---|---|---|---|---|---|---|---|---|---|---|---|---|---|---|---|---|
| | | | | | | | Al | Mg | Si | Ca | Element group A | | | Element group B | | | | Element group C | |
| | | | | T1 | T2 | T3 | | | | | Sn | Bi | In | Y | La | Ce | Sr | B | P |
| 20 | Example | 550 | D | 12.5 | 25 | 2 | 15.0 | 8.5 | 0.20 | 0.20 | 0.50 | 0 | 0 | 0 | 0 | 0 | 0 | 0 | 0 |
| 21 | Example | 550 | D | 10 | 30 | 4 | 20.0 | 5.0 | 0.05 | 0.30 | 0.10 | 0 | 0 | 0 | 0 | 0 | 0 | 0 | 0 |
| 22 | Example | 550 | D | 12.5 | 30 | 4 | 20.0 | 5.0 | 0.30 | 1.00 | 0 | 0 | 0 | 0 | 0 | 0 | 0 | 0 | 0 |
| 23 | Example | 550 | D | 17.5 | 30 | 4 | 20.0 | 6.0 | 0.50 | 1.50 | 0 | 0 | 0 | 0 | 0 | 0 | 0 | 0 | 0 |
| 24 | Example | 550 | D | 20 | 30 | 3 | 20.0 | 6.0 | 2.30 | 1.80 | 1.00 | 0 | 0 | 0 | 0 | 0 | 0 | 0 | 0 |
| 25 | Example | 550 | D | 10 | 25 | 2 | 20.0 | 8.0 | 0.20 | 0.50 | 2.00 | 0 | 0 | 0 | 0 | 0 | 0 | 0.05 | 0 |
| 26 | Comparative Example | 500 | D | 10 | 20 | 4 | 25.0 | 3.0 | 0 | 0.10 | 0 | 0 | 0 | 0 | 0 | 0 | 0 | 0 | 0 |
| 27 | Example | 500 | D | 10 | 30 | 4 | 25.0 | 6.5 | 0.10 | 0 | 1.50 | 0 | 0 | 0.01 | 0 | 0 | 0 | 0 | 0 |
| 28 | Example | 550 | D | 12.5 | 30 | 4 | 25.0 | 6.0 | 0 | 0 | 2.50 | 0 | 0 | 0.20 | 0 | 0 | 0 | 0 | 0 |
| 29 | Comparative Example | 550 | D | 15 | 25 | 2 | 25.0 | 8.0 | 0.40 | 0.50 | 3.50 | 0 | 0 | 0 | 0 | 0 | 0 | 0 | 0 |
| 30 | Example | 500 | D | 20 | 25 | 2 | 25.0 | 8.0 | 0.20 | 0 | 0 | 0.80 | 0 | 0.40 | 0 | 0 | 0 | 0 | 0 |
| 31 | Comparative Example | 500 | D | 10 | 25 | 2 | 30.0 | 4.5 | 0 | 0 | 0 | 1.50 | 0 | 0 | 0 | 0 | 0 | 0 | 0 |
| 32 | Example | 500 | D | 12.5 | 30 | 4 | 30.0 | 5.0 | 0.05 | 0 | 0 | 0 | 0 | 0 | 0 | 0 | 0 | 0 | 0 |
| 33 | Example | 500 | D | 15 | 30 | 4 | 30.0 | 6.0 | 0.5 | 0 | 0 | 0 | 0.80 | 0 | 0.01 | 0.01 | 0 | 0 | 0 |
| 34 | Comparative Example | 500 | F | 25 | 15 | 25 | 30.0 | 6.0 | 0 | 0 | 0 | 0 | 1.50 | 0 | 0 | 0 | 0 | 0 | 0 |
| 35 | Example | 500 | D | 12.5 | 50 | 4 | 30.0 | 6.5 | 0 | 0 | 0 | 0 | 0 | 0 | 0 | 0 | 0 | 0 | 0 |
| 36 | Example | 550 | D | 20 | 25 | 2 | 30.0 | 8.0 | 1.50 | 0.20 | 0 | 0 | 0 | 0 | 0.20 | 0.20 | 0 | 0 | 0 |
| 37 | Example | 550 | D | 20 | 25 | 2 | 30.0 | 8.0 | 2.0 | 0 | 0 | 0 | 0 | 0 | 0.40 | 0.40 | 0 | 0 | 0 |
| 38 | Comparative Example | 550 | B | 12.5 | 12.5 | 12.5 | 30.0 | 8.5 | 0 | 0 | 0 | 0 | 0 | 0 | 0.60 | 0.60 | 0 | 0 | 0 |
| 39 | Example | 550 | D | 10 | 30 | 4 | 35.0 | 6.0 | 0 | 0 | 0 | 0 | 0 | 0 | 0 | 0 | 0.20 | 0 | 0 |

| | | | | | | | | | | | | | | | | | | | |
|---|---|---|---|---|---|---|---|---|---|---|---|---|---|---|---|---|---|---|---|
| The underline indicates that the value is out of the range of the present invention or out of the range of preferred manufacturing conditions. | | | | | | | | | | | | | | | | | | | |

**[Table 1C]**

| No. | Item | Bath temperature (°C) | Manufacturing method classification | Average cooling rate (°C/sec) | | | Average chemical composition of plating layer (mass%) remainder: Zn and impurities | | | | | | | | | | | | |
|---|---|---|---|---|---|---|---|---|---|---|---|---|---|---|---|---|---|---|---|
| | | | | | | | Al | Mg | Si | Ca | Element group A | | | Element group B | | | | Element group C | |
| | | | | T1 | T2 | T3 | | | | | Sn | Bi | In | Y | La | Ce | Sr | B | P |
| 40 | Example | 550 | D | 12.5 | 30 | 4 | 35.0 | 6.0 | 0 | 0 | 0 | 0 | 0 | 0 | 0 | 0 | 0.40 | 0 | 0 |
| 41 | Comparative Example | 550 | C | 30 | 30 | 30 | 35.0 | 8.0 | 0.3 | 0 | 0 | 0 | 0 | 0 | 0 | 0 | 0.60 | 0 | 0 |
| 42 | Comparative Example | 550 | D | 20 | 20 | 4 | 35.0 | 12.0 | 3.0 | 0.50 | 0 | 0 | 0 | 0 | 0 | 0 | 0 | 0 | 0 |
| 43 | Example | 500 | D | 10 | 20 | 4 | 35.0 | 8.0 | 0.10 | 0.30 | 0 | 0 | 0 | 0 | 0 | 0 | 0 | 0 | 0 |
| 44 | Example | 500 | D | 15 | 30 | 4 | 40.0 | 8.0 | 0.50 | 0 | 0 | 0 | 0 | 0 | 0 | 0 | 0 | 0 | 0 |
| 45 | Example | 500 | D | 15 | 30 | 4 | 40.0 | 8.0 | 0.40 | 0 | 0 | 0 | 0 | 0 | 0 | 0 | 0 | 0 | 0.40 |
| 46 | Comparative Example | 500 | D | 12.5 | 25 | 2 | 40.0 | 8.0 | 0.20 | 0 | 0 | 0 | 0 | 0 | 0 | 0 | 0 | 0 | 0.60 |
| 47 | Example | 500 | D | 10 | 40 | 4 | 40.0 | 6.0 | 0 | 0 | 0 | 0 | 0 | 0 | 0 | 0 | 0 | 0 | 0 |
| 48 | Example | 500 | D | 12.5 | 40 | 4 | 40.0 | 6.0 | 0.20 | 0.20 | 0 | 0 | 0 | 0 | 0 | 0 | 0 | 0 | 0 |
| 49 | Comparative Example | 550 | A | 4 | 4 | 4 | 45.0 | 7.0 | 0.10 | 3.50 | 1.00 | 0 | 0 | 0 | 0 | 0 | 0 | 0 | 0 |
| 50 | Comparative Example | 550 | C | 50 | 50 | 50 | 45.0 | 10.0 | 0.10 | 0.10 | 0 | 0 | 0 | 0 | 0 | 0 | 0 | 0 | 0 |
| 51 | Comparative Example | 550 | D | 15 | 20 | 4 | 50.0 | 6.0 | 0.10 | 0.10 | 0 | 0 | 0 | 0 | 0 | 0 | 0 | 0 | 0 |
| 52 | Comparative Example | 550 | E | 7.5 | 35 | 1 | 55.0 | 4.5 | 0.10 | 0.20 | 0.50 | 0 | 0 | 0 | 0 | 0 | 0 | 0 | 0 |
| 53 | Example | 550 | D-2 | 15 | 30 | 10 | 15.0 | 6.0 | 0.30 | 0.20 | 0 | 0 | 0.01 | 0 | 0 | 0 | 0 | 0 | 0 |
| 54 | Example | 550 | D-2 | 12.5 | 30 | 7.5 | 30.0 | 5.0 | 0.05 | 0.10 | 0 | 0 | 0 | 0 | 0 | 0 | 0 | 0 | 0 |
| 55 | Example | 500 | D | 10 | 30 | 3 | 15.0 | 8.0 | 0.3 | 0.2 | 0 | 0 | 0 | 0 | 0 | 0 | 0 | 0 | 0 |
| 56 | Example | 550 | D | 20 | 30 | 3 | 20.0 | 6.0 | 2.3 | 1.8 | 1 | 0 | 0 | 0 | 0 | 0 | 0 | 0 | 0 |
| 57 | Example | 500 | D | 12.5 | 30 | 4 | 10.0 | 6.0 | 0.3 | 0.2 | 0.2 | 0 | 0 | 0 | 0 | 0 | 0 | 0.02 | 0 |
| 58 | Example | 550 | D | 12.5 | 30 | 4 | 35.0 | 6.0 | 0 | 0 | 0 | 0 | 0 | 0 | 0 | 0 | 0.4 | 0 | 0 |

| | | | | | | | | | | | | | | | | | | | |
|---|---|---|---|---|---|---|---|---|---|---|---|---|---|---|---|---|---|---|---|
| The underline indicates that the value is out of the range of the present invention or out of the range of preferred manufacturing conditions. | | | | | | | | | | | | | | | | | | | |

**[Table 2A]**

| No. | Item | Average chemical composition of plating layer (mass%) remainder: Zn and impurities | | | | | | | | | | | | | | | | | | |
|---|---|---|---|---|---|---|---|---|---|---|---|---|---|---|---|---|---|---|---|---|
| | | Element group D | | | | | | | | | | | | | | | | Element group E | | |
| | | Cr | Ti | V | Zr | Ni | Co | Nb | Cu | Mn | Mo | W | Ag | Li | Na | K | Fe | Sb | Pb | Ba |
| 1 | Comparative Example | 0 | 0 | 0 | 0 | 0 | 0 | 0 | 0 | 0 | 0 | 0 | 0 | 0 | 0 | 0 | 0.30 | 0.01 | 0 | 0 |
| 2 | Comparative Example | 0 | 0 | 0 | 0 | 0 | 0 | 0 | 0 | 0 | 0 | 0 | 0 | 0 | 0 | 0 | 0.30 | 0 | 0 | 0 |
| 3 | Comparative Example | 0 | 0 | 0 | 0 | 0.1 | 0 | 0 | 0 | 0 | 0 | 0 | 0 | 0 | 0 | 0 | 0.43 | 0 | 0 | 0 |
| 4 | Example | 0 | 0 | 0 | 0 | 0.1 | 0 | 0 | 0 | 0 | 0 | 0.1 | 0 | 0 | 0 | 0 | 0.45 | 0.02 | 0 | 0 |
| 5 | Example | 0 | 0 | 0.1 | 0 | 0 | 0 | 0 | 0 | 0 | 0 | 0 | 0 | 0 | 0 | 0 | 0.45 | 0 | 0 | 0 |
| 6 | Example | 0.10 | 0.10 | 0 | 0.10 | 0.1 | 0 | 0 | 0 | 0 | 0 | 0 | 0 | 0 | 0 | 0 | 0.45 | 0 | 0 | 0 |
| 7 | Example | 0.20 | 0.20 | 0 | 0.20 | 0.8 | 0 | 0 | 0 | 0 | 0 | 0 | 0 | 0 | 0 | 0 | 0.45 | 0 | 0.01 | 0 |
| 8 | Example | 0 | 0 | 0 | 0 | 0.2 | 0 | 0 | 0 | 0 | 0 | 0 | 0.1 | 0 | 0 | 0 | 0.45 | 0 | 0 | 0 |
| 9 | Example | 0 | 0 | 0 | 0 | 0 | 0 | 0 | 0 | 0 | 0 | 0 | 0 | 0 | 0 | 0 | 0.45 | 0 | 0 | 0 |
| 10 | Example | 0 | 0 | 0 | 0 | 0 | 0 | 0 | 0 | 0 | 0 | 0 | 0 | 0 | 0 | 0 | 0.45 | 0 | 0 | 0 |
| 11 | Example | 0.01 | 0 | 0 | 0 | 0 | 0 | 0 | 0 | 0 | 0 | 0 | 0 | 0 | 0 | 0 | 0.45 | 0 | 0 | 0 |
| 12 | Example | 0 | 0 | 0 | 0 | 0 | 0 | 0 | 0 | 0 | 0 | 0 | 0 | 0 | 0 | 0 | 0.45 | 0 | 0 | 0 |
| 13 | Example | 0 | 0 | 0 | 0 | 0 | 0 | 0 | 0 | 0 | 0 | 0 | 0 | 0 | 0 | 0 | 0.50 | 0 | 0 | 0 |
| 14 | Example | 0 | 0.10 | 0 | 0 | 0 | 0 | 0 | 0 | 0 | 0 | 0 | 0 | 0 | 0 | 0 | 0.50 | 0 | 0 | 0 |
| 15 | Example | 0 | 0 | 0 | 0 | 0 | 0 | 0 | 0.10 | 0 | 0 | 0 | 0 | 0 | 0 | 0 | 0.50 | 0 | 0.20 | 0 |
| 16 | Example | 0 | 0 | 0.1 | 0 | 0 | 0 | 0 | 0 | 0 | 0 | 0 | 0 | 0 | 0 | 0 | 0.50 | 0 | 0 | 0 |
| 17 | Example | 0 | 0 | 0 | 0.10 | 0 | 0 | 0 | 0 | 0 | 0 | 0 | 0 | 0.1 | 0 | 0 | 0.50 | 0 | 0 | 0 |
| 18 | Example | 0 | 0 | 0 | 0 | 0 | 0 | 0 | 0 | 0 | 0 | 0 | 0 | 0 | 0 | 0 | 0.50 | 0 | 0 | 0 |
| 19 | Example | 0 | 0 | 0 | 0 | 0 | 0 | 0 | 0.35 | 0 | 0 | 0 | 0 | 0 | 0 | 0 | 0.50 | 0 | 0 | 0 |

| | | | | | | | | | | | | | | | | | | | | |
|---|---|---|---|---|---|---|---|---|---|---|---|---|---|---|---|---|---|---|---|---|
| The underline indicates that the value is out of the range of the present invention. | | | | | | | | | | | | | | | | | | | | |

**[Table 2C]**

| No. | Item | Average chemical composition of plating layer (mass%) remainder: Zn and impurities | | | | | | | | | | | | | | | | | | |
|---|---|---|---|---|---|---|---|---|---|---|---|---|---|---|---|---|---|---|---|---|
| | | Element group D | | | | | | | | | | | | | | | | Element group E | | |
| | | Cr | Ti | V | Zr | Ni | Co | Nb | Cu | Mn | Mo | W | Ag | Li | Na | K | Fe | Sb | Pb | Ba |
| 20 | Example | 0.20 | 0 | 0.1 | 0 | 0 | 0 | 0 | 0 | 0 | 0 | 0 | 0 | 0 | 0 | 0 | 0.50 | 0.40 | 0 | 0 |
| 21 | Example | 0 | 0 | 0 | 0 | 0 | 0 | 0 | 0.05 | 0 | 0 | 0 | 0 | 0 | 0 | 0 | 0.50 | 0 | 0.40 | 0 |
| 22 | Example | 0 | 0 | 0 | 0 | 0 | 0.10 | 0 | 0 | 0 | 0 | 0 | 0 | 0 | 0 | 0 | 0.50 | 0.20 | 0 | 0 |
| 23 | Example | 0 | 0 | 0 | 0 | 0 | 0.20 | 0 | 0 | 0 | 0 | 0 | 0 | 0 | 0 | 0 | 0.50 | 0 | 0 | 0 |
| 24 | Example | 0 | 0 | 0.01 | 0 | 0 | 0 | 0 | 0 | 0 | 0 | 0 | 0 | 0 | 0 | 0 | 0.50 | 0 | 0 | 0 |
| 25 | Example | 0 | 0 | 0.05 | 0 | 0 | 0 | 0 | 0 | 0 | 0 | 0 | 0 | 0 | 0 | 0 | 0.50 | 0 | 0 | 0 |
| 26 | Comparative Example | 0 | 0 | 0 | 0 | 0 | 0 | 0 | 0 | 0 | 0 | 0 | 0 | 0 | 0 | 0 | 0.50 | 0 | 0 | 0 |
| 27 | Example | 0 | 0 | 0 | 0 | 0 | 0 | 0 | 0 | 0.10 | 0 | 0 | 0 | 0 | 0 | 0.01 | 0.50 | 0 | 0 | 0 |
| 28 | Example | 0 | 0.1 | 0 | 0.01 | 0 | 0 | 0 | 0 | 0.20 | 0 | 0 | 0 | 0 | 0 | 0 | 0.83 | 0.05 | 0 | 0 |
| 29 | Comparative Example | 0 | 0 | 0 | 0 | 0 | 0 | 0 | 0 | 0 | 0 | 0 | 0 | 0 | 0 | 0 | 0.83 | 0 | 0 | 0 |
| 30 | Example | 0 | 0 | 0.20 | 0 | 0 | 0 | 0 | 0 | 0 | 0 | 0 | 0 | 0 | 0 | 0 | 0.83 | 0 | 0 | 0.1 |
| 31 | Comparative Example | 0 | 0 | 0 | 0 | 0 | 0 | 0 | 0 | 0 | 0 | 0 | 0 | 0 | 0 | 0 | 0.95 | 0 | 0 | 0 |
| 32 | Example | 0 | 0 | 0 | 0 | 0 | 0 | 0 | 0 | 0 | 0 | 0 | 0 | 0 | 0.05 | 0 | 0.95 | 0 | 0 | 0 |
| 33 | Example | 0 | 0 | 0.2 | 0 | 0 | 0 | 0 | 0 | 0 | 0 | 0 | 0 | 0 | 0 | 0 | 0.95 | 0 | 0 | 0 |
| 34 | Comparative Example | 0 | 0 | 0 | 0 | 0 | 0 | 0 | 0 | 0 | 0 | 0 | 0 | 0 | 0 | 0 | 0.95 | 0 | 0 | 0 |
| 35 | Example | 0 | 0.05 | 0 | 0 | 0 | 0 | 0.10 | 0 | 0 | 0 | 0 | 0 | 0 | 0 | 0 | 0.95 | 0 | 0 | 0 |
| 36 | Example | 0.05 | 0 | 0 | 0 | 0 | 0 | 0 | 0 | 0 | 0.1 | 0 | 0 | 0 | 0 | 0 | 0.95 | 0 | 0 | 0 |
| 37 | Example | 0 | 0 | 0 | 0 | 0 | 0 | 0 | 0 | 0 | 0 | 0 | 0 | 0 | 0 | 0 | 0.95 | 0 | 0 | 0 |
| 38 | Comparative Example | 0 | 0 | 0 | 0 | 0 | 0 | 0 | 0 | 0 | 0 | 0 | 0 | 0 | 0 | 0 | 0.95 | 0 | 0 | 0 |
| 39 | Example | 0 | 0 | 0 | 0 | 0 | 0 | 0.10 | 0 | 0 | 0 | 0 | 0 | 0 | 0 | 0 | 1.08 | 0 | 0 | 0 |

| | | | | | | | | | | | | | | | | | | | | |
|---|---|---|---|---|---|---|---|---|---|---|---|---|---|---|---|---|---|---|---|---|
| The underline indicates that the value is out of the range of the present invention. | | | | | | | | | | | | | | | | | | | | |

**[Table 13A]**

| No. | Item | Average chemical composition of plating layer (mass%) remainder: Zn and impurities | | | | | | | | | | | | | | | | | | |
|---|---|---|---|---|---|---|---|---|---|---|---|---|---|---|---|---|---|---|---|---|
| | | Element group D | | | | | | | | | | | | | | | | Element group E | | |
| | | Cr | Ti | V | Zr | Ni | Co | Nb | Cu | Mn | Mo | W | Ag | Li | Na | K | Fe | Sb | Pb | Ba |
| 40 | Example | 0.20 | 0.20 | 0 | 0 | 0 | 0 | 0.20 | 0 | 0 | 0 | 0 | 0.05 | 0 | 0 | 0 | 1.08 | 0 | 0 | 0 |
| 41 | Comparative Example | 0 | 0 | 0 | 0 | 0 | 0 | 0 | 0 | 0 | 0 | 0 | 0 | 0 | 0 | 0 | 1.08 | 0 | 0 | 0 |
| 42 | Comparative Example | 0 | 0 | 0 | 0 | 0 | 0 | 0 | 0 | 0 | 0 | 0 | 0 | 0 | 0 | 0 | 1.08 | 0 | 0 | 0 |
| 43 | Example | 0 | 0 | 0 | 0 | 0 | 0 | 0 | 0 | 0 | 0 | 0 | 0 | 0 | 0 | 0 | 1.08 | 0 | 0 | 0 |
| 44 | Example | 0 | 0 | 0 | 0 | 0 | 0 | 0 | 0 | 0 | 0 | 0 | 0 | 0 | 0.01 | 0 | 1.20 | 0 | 0 | 0 |
| 45 | Example | 0 | 0 | 0 | 0 | 0 | 0 | 0 | 0 | 0 | 0.2 | 0 | 0 | 0 | 0 | 0 | 0.75 | 0 | 0 | 0 |
| 46 | Comparative Example | 0 | 0 | 0 | 0 | 0 | 0 | 0 | 0 | 0 | 0 | 0 | 0 | 0 | 0 | 0 | 0.75 | 0 | 0 | 0 |
| 47 | Example | 0 | 0 | 0 | 0 | 0 | 0 | 0 | 0 | 0 | 0 | 0 | 0 | 0 | 0 | 0 | 0.75 | 0 | 0 | 0 |
| 48 | Example | 0 | 0 | 0.2 | 0 | 0 | 0 | 0 | 0 | 0 | 0 | 0 | 0 | 0 | 0 | 0 | 0.75 | 0 | 0 | 0 |
| 49 | Comparative Example | 0 | 0 | 0 | 0 | 0 | 0 | 0 | 0 | 0 | 0 | 0 | 0 | 0 | 0 | 0 | 0.75 | 0 | 0 | 0 |
| 50 | Comparative Example | 0.05 | 0.05 | 0 | 0.05 | 0 | 0 | 0 | 0 | 0 | 0 | 0 | 0 | 0 | 0 | 0 | 0.75 | 0 | 0.05 | 0 |
| 51 | Comparative Example | 0 | 0 | 0 | 0 | 0 | 0 | 0 | 0 | 0.1 | 0 | 0 | 0 | 0 | 0 | 0 | 1.45 | 0.05 | 0 | 0 |
| 52 | Comparative Example | 0 | 0 | 0 | 0 | 0 | 0 | 0 | 0.05 | 0 | 0 | 0 | 0.05 | 0 | 0 | 0 | 1.58 | 0 | 0 | 0 |
| 53 | Example | 0 | 0 | 0 | 0.10 | 0 | 0 | 0 | 0 | 0 | 0 | 0 | 0 | 0 | 0 | 0 | 0.58 | 0 | 0 | 0 |
| 54 | Example | 0 | 0 | 0 | 0 | 0 | 0 | 0 | 0 | 0 | 0 | 0 | 0 | 0 | 0.05 | 0 | 0.95 | 0 | 0 | 0 |
| 55 | Example | 0 | 0 | 0 | 0 | 0 | 0 | 0 | 0 | 0 | 0 | 0 | 0 | 0 | 0 | 0 | 0.50 | 0 | 0 | 0 |
| 56 | Example | 0 | 0 | 0.01 | 0 | 0 | 0 | 0 | 0 | 0 | 0 | 0 | 0 | 0 | 0 | 0 | 0.50 | 0 | 0 | 0 |
| 57 | Example | 0.2 | 0.2 | 0 | 0.2 | 0.8 | 0 | 0 | 0 | 0 | 0 | 0 | 0 | 0 | 0 | 0 | 0.45 | 0 | 0.01 | 0 |
| 58 | Example | 0.2 | 0.2 | 0 | 0 | 0 | 0 | 0.2 | 0 | 0 | 0 | 0 | 0.05 | 0 | 0 | 0 | 1.08 | 0 | 0 | 0 |

| | | | | | | | | | | | | | | | | | | | | |
|---|---|---|---|---|---|---|---|---|---|---|---|---|---|---|---|---|---|---|---|---|
| The underline indicates that the value is out of the range of the present invention. | | | | | | | | | | | | | | | | | | | | |

**[Table 3B]**

| No. | Item | Plating layer configuration | | | | | | | | | | |
|---|---|---|---|---|---|---|---|---|---|---|---|---|
| | | Thickness of plating layer (one surface) | Phase configuration | | | | | | | | | |
| | | | MgZn₂ | Al-containing phase | | | | | Ternary eutectic structure (area%) | Mg₂Si phase (area %) | Al-Ca-Si phase (area%) | Remainder (area%) |
| | | µm | (area%) | Al-Zn phase (area%) | Al-phase (area%) | Zn-Al phase (area%) | Al-containing phase total (area%) | ([Al] + [Zn - Al)/[Al - Zn] ratio | | | | |
| 1 | Comparative Example | 10 | 5 | 0 | 0 | 10 | 10 | - | 80 | 0 | 0 | 5.0 |
| 2 | Comparative Example | 20 | 5 | 0 | 0 | 10 | 10 | - | 80 | 0 | 0 | 5.0 |
| 3 | Comparative Example | 20 | 5 | 15 | 0 | 5 | 20 | 0.333 | 70 | 0.1 | 0.1 | 4.8 |
| 4 | Example | 20 | 10 | 10 | 5 | 5 | 20 | 1.0 | 65 | 0.1 | 0.1 | 4.8 |
| 5 | Example | 20 | 10 | 10 | 5 | 5 | 20 | 1.0 | 65 | 0 | 0 | 5.0 |
| 6 | Example | 20 | 15 | 10 | 0 | 10 | 20 | 1.0 | 60 | 0.1 | 0.1 | 4.8 |
| 7 | Example | 20 | 20 | 5 | 10 | 5 | 20 | 3.0 | 55 | 0.2 | 0.1 | 4.7 |
| 8 | Example | 20 | 20 | 5 | 10 | 5 | 20 | 3.0 | 55 | 0.1 | 0.4 | 4.5 |
| 9 | Example | 20 | 20 | 5 | 10 | 5 | 20 | 3.0 | 55 | 0.1 | 0.3 | 4.6 |
| 10 | Example | 30 | 30 | 5 | 10 | 5 | 20 | 3.0 | 45 | 0.1 | 0.3 | 4.6 |
| 11 | Example | 20 | 30 | 5 | 10 | 5 | 20 | 3.0 | 45 | 0.1 | 0.3 | 4.6 |
| 12 | Example | 20 | 30 | 5 | 10 | 5 | 20 | 3.0 | 45 | 0.1 | 0.3 | 4.6 |
| 13 | Example | 20 | 30 | 10 | 10 | 5 | 25 | 1.5 | 40 | 0.1 | 0.3 | 4.6 |
| 14 | Example | 20 | 15 | 10 | 10 | 5 | 25 | 1.5 | 55 | 0 | 0 | 5.0 |
| 15 | Example | 20 | 15 | 10 | 10 | 5 | 25 | 1.5 | 55 | 0.3 | 0.2 | 4.5 |
| 16 | Example | 20 | 20 | 10 | 10 | 5 | 25 | 1.5 | 50 | 0.2 | 0.2 | 4.6 |
| 17 | Example | 20 | 20 | 10 | 15 | 5 | 30 | 2.0 | 45 | 0.2 | 0.2 | 4.6 |
| 18 | Example | 30 | 30 | 10 | 15 | 5 | 30 | 2.0 | 35 | 0.2 | 0.2 | 4.6 |
| 19 | Example | 20 | 30 | 10 | 15 | 5 | 30 | 2.0 | 35 | 0.1 | 0.6 | 4.3 |

| | | | | | | | | | | | | |
|---|---|---|---|---|---|---|---|---|---|---|---|---|
| The underline indicates that the value is out of the range of the present invention. | | | | | | | | | | | | |

**[Table 3C]**

| No. | Item | Plating layer configuration | | | | | | | | | | |
|---|---|---|---|---|---|---|---|---|---|---|---|---|
| | | Thickness of plating layer (one surface) | Phase configuration | | | | | | | | | |
| | | | MgZn₂ | Al-containing phase | | | | | Ternary eutectic structure (area%) | Mg₂Si phase (area%) | Al-Ca-Si phase (area%) | Remainder (area%) |
| | | µm | (area%) | Al-Zn phase (area%) | Al-phase (area%) | Zn-Al phase (area%) | Al-containing phase total (area%) | ([Al] + [Zn - Al)/[Al - Zn] ratio | | | | |
| 20 | Example | 20 | 35 | 10 | 15 | 5 | 30 | 2.0 | 30 | 0.1 | 0.2 | 4.7 |
| 21 | Example | 20 | 15 | 5 | 20 | 5 | 30 | 5.0 | 50 | 0 | 0.1 | 4.9 |
| 22 | Example | 20 | 15 | 5 | 20 | 10 | 35 | 6.0 | 45 | 0.1 | 0.6 | 4.3 |
| 23 | Example | 20 | 20 | 5 | 20 | 10 | 35 | 6.0 | 40 | 0.1 | 1.5 | 3.4 |
| 24 | Example | 20 | 20 | 5 | 20 | 10 | 35 | 6.0 | 40 | 1 | 2 | 2.0 |
| 25 | Example | 20 | 30 | 5 | 20 | 10 | 35 | 6.0 | 30 | 0.1 | 0.5 | 4.4 |
| 26 | Comparative Example | 20 | 5 | 15 | 15 | 5 | 35 | 1.3 | 55 | 0 | 0 | 5.0 |
| 27 | Example | 20 | 25 | 5 | 25 | 10 | 40 | 7.0 | 30 | 0.1 | 0 | 4.9 |
| 28 | Example | 20 | 20 | 5 | 25 | 10 | 40 | 7.0 | 35 | 0 | 0 | 5.0 |
| 29 | Comparative Example | 20 | 35 | 5 | 25 | 10 | 40 | 7.0 | 20 | 0.1 | 0.5 | 4.4 |
| 30 | Example | 20 | 35 | 5 | 25 | 10 | 40 | 7.0 | 20 | 0.2 | 0 | 4.8 |
| 31 | Comparative Example | 20 | 10 | 15 | 30 | 15 | 60 | 3.0 | 25 | 0 | 0 | 5.0 |
| 32 | Example | 20 | 20 | 15 | 30 | 15 | 60 | 3.0 | 15 | 0.1 | 0 | 4.9 |
| 33 | Example | 20 | 30 | 10 | 30 | 15 | 55 | 4.5 | 10 | 0.5 | 0 | 4.5 |
| 34 | Comparative Example | 20 | 30 | 35 | 25 | 0 | 60 | 0.7 | 5 | 0 | 0 | 5.0 |
| 35 | Example | 20 | 30 | 15 | 35 | 10 | 60 | 3.0 | 5 | 0 | 0 | 5.0 |
| 36 | Example | 20 | 40 | 10 | 30 | 10 | 50 | 4.0 | 5 | 1 | 0.2 | 3.8 |
| 37 | Example | 10 | 40 | 10 | 30 | 10 | 50 | 4.0 | 5 | 2 | 0 | 3.0 |
| 38 | Comparative Example | 20 | 40 | 30 | 15 | 5 | 50 | 0.7 | 5 | 0 | 0 | 5.0 |
| 39 | Example | 20 | 30 | 10 | 40 | 15 | 65 | 5.5 | 0 | 0 | 0 | 5.0 |

| | | | | | | | | | | | | |
|---|---|---|---|---|---|---|---|---|---|---|---|---|
| The underline indicates that the value is out of the range of the present invention. | | | | | | | | | | | | |

**[Table 4A]**

| No. | Item | Plating layer configuration | | | | | | | | | | |
|---|---|---|---|---|---|---|---|---|---|---|---|---|
| | | Thickness of plating layer (one surface) | Phase configuration | | | | | | | | | |
| | | | MgZn₂ | Al-containing phase | | | | | Ternary eutectic structure (area%) | Mg₂Si phase (area%) | Al-Ca-Si phase (area%) | Remainder (area%) |
| | | µm | (area%) | Al-Zn phase (area%) | Al-phase (area%) | Zn-Al phase (area%) | Al-containing phase total (area%) | ([Al] + [Zn - Al])/[Al - Zn] ratio | | | | |
| 40 | Example | 20 | 30 | 10 | 40 | 15 | 65 | 5.5 | 0 | 0 | 0 | 5.0 |
| 41 | Comparative Example | 20 | 40 | 15 | 30 | 10 | 55 | 2.7 | 0 | 0.3 | 0 | 4.7 |
| 42 | Comparative Example | 20 | 55 | 10 | 25 | 5 | 40 | 3.0 | 0 | 2.5 | 0.5 | 2.0 |
| 43 | Example | 20 | 40 | 15 | 30 | 10 | 55 | 2.7 | 0 | 0.1 | 0.3 | 4.6 |
| 44 | Example | 20 | 40 | 10 | 35 | 10 | 55 | 4.5 | 0 | 0.5 | 0 | 4.5 |
| 45 | Example | 20 | 40 | 10 | 35 | 10 | 55 | 4.5 | 0 | 0.4 | 0 | 4.6 |
| 46 | Comparative Example | 20 | 40 | 10 | 35 | 10 | 55 | 4.5 | 0 | 0.2 | 0 | 4.8 |
| 47 | Example | 20 | 30 | 15 | 40 | 10 | 65 | 3.3 | 0 | 0 | 0 | 5.0 |
| 48 | Example | 20 | 30 | 15 | 40 | 10 | 65 | 3.3 | 0 | 0.1 | 0.2 | 4.7 |
| 49 | Comparative Example | 20 | 30 | 40 | 15 | 10 | 65 | 0.6 | 0 | 0 | 0.2 | 4.8 |
| 50 | Comparative Example | 20 | 50 | 10 | 30 | 5 | 45 | 3.5 | 0 | 0.1 | 0.1 | 4.8 |
| 51 | Comparative Example | 10 | 30 | 15 | 35 | 15 | 65 | 3.3 | 0 | 0.1 | 0.1 | 4.8 |
| 52 | Comparative Example | 20 | 10 | 10 | 65 | 10 | 85 | 7.5 | 0 | 0.1 | 0.2 | 4.7 |
| 53 | Example | 20 | 20 | 15 | 10 | 5 | 30 | 1.0 | 45 | 0.1 | 0.2 | 4.7 |
| 54 | Example | 20 | 20 | 20 | 25 | 10 | 55 | 1.8 | 20 | 0.1 | 0.1 | 4.8 |
| 55 | Example | 3 | 30 | 10 | 15 | 5 | 30 | 2.0 | 35 | 0.2 | 0.2 | 4.6 |
| 56 | Example | 5 | 20 | 5 | 20 | 10 | 35 | 6.0 | 40 | 1 | 2 | 2.0 |
| 57 | Example | 70 | 20 | 5 | 10 | 5 | 20 | 3.0 | 55 | 0.2 | 0.1 | 4.7 |
| 58 | Example | 80 | 30 | 10 | 40 | 15 | 65 | 5.5 | 0 | 0 | 0 | 5.0 |

| | | | | | | | | | | | | |
|---|---|---|---|---|---|---|---|---|---|---|---|---|
| The underline indicates that the value is out of the range of the present invention. | | | | | | | | | | | | |

**[Table 4B]**

| | | | | | |
|---|---|---|---|---|---|
| 2 | Comparative Example | 0.001 | 1.0 | × | × |
| 3 | Comparative Example | 0.005 | 3.0 | ○ | ○ |
| 4 | Example | 0.008 | 3.5 | ○ | ○ |
| 5 | Example | 0.003 | 8.5 | × | × |
| 6 | Example | 0.007 | 3.5 | ○ | ○ |
| 7 | Example | 0.015 | 3.0 | ○ | ○ |
| 8 | Example | 0.020 | 4.0 | ○ | ○ |
| 9 | Example | 0.010 | 6.5 | ○ | ○ |
| 10 | Example | 0.011 | 6.0 | ○ | ○ |
| 11 | Example | 0.010 | 6.5 | ○ | ○ |
| 12 | Example | 0.010 | 6.5 | ○ | ○ |
| 13 | Example | 0.010 | 6.5 | ○ | ○ |
| 14 | Example | 0.003 | 20.0 | × | × |
| 15 | Example | 0.020 | 2.0 | ○ | ○ |
| 16 | Example | 0.015 | 3.0 | ○ | ○ |
| 17 | Example | 0.016 | 3.0 | ○ | ○ |
| 18 | Example | 0.015 | 3.0 | ○ | ○ |
| 19 | Example | 0.030 | 4.0 | ○ | ○ |
| 20 | Example | 0.010 | 4.5 | ○ | ○ |
| 21 | Example | 0.007 | 9.0 | × | ○ |
| 22 | Example | 0.016 | 12.0 | ○ | ○ |
| 23 | Example | 0.024 | 12.0 | ○ | ○ |
| 24 | Example | 0.120 | 3.0 | ○ | ○ |
| 25 | Example | 0.009 | 12.0 | ○ | ○ |
| 26 | Comparative Example | 0.003 | 8.5 | × | × |
| 27 | Example | 0.007 | 0.8 | ○ | × |
| 28 | Example | 0.003 | 2.0 | × | × |
| 29 | Comparative Example | 0.020 | 5.0 | ○ | ○ |

| | | | | | |
|---|---|---|---|---|---|
| The underline indicates that the value is out of the range of the present invention. | | | | | |

**[Table 4B]**

| No. | Item | Plating layer configuration | | | |
|---|---|---|---|---|---|
| | | IΣ (Si)/(IΣ (Zn) + IΣ (Al)) | IΣ (Ca)/IΣ (Si) | Presence of Mg₂Si phase | Presence of Al-Ca-Si compound |
| 30 | Example | 0.200 | 0.1 | ○ | × |
| 31 | Comparative Example | 0.003 | 2.0 | × | × |
| 32 | Example | 0.005 | 1.0 | ○ | × |
| 33 | Example | 0.025 | 0.2 | ○ | × |
| 34 | Comparative Example | 0.002 | 20.0 | × | × |
| 35 | Example | 0.003 | 2.0 | × | × |
| 36 | Example | 0.075 | 0.5 | ○ | ○ |
| 37 | Example | 0.100 | 0.1 | ○ | × |
| 38 | Comparative Example | 0.002 | 3.0 | × | × |
| 39 | Example | 0.003 | 2.0 | × | × |
| 40 | Example | 0.003 | 2.0 | × | × |
| 41 | Comparative Example | 0.015 | 0.4 | ○ | × |
| 42 | Comparative Example | 0.150 | 0.7 | ○ | ○ |
| 43 | Example | 0.008 | 8.0 | ○ | ○ |
| 44 | Example | 0.025 | 0.2 | ○ | × |
| 45 | Example | 0.020 | 0.3 | ○ | × |
| 46 | Comparative Example | 0.011 | 0.5 | ○ | × |
| 47 | Example | 0.003 | 2.0 | × | × |
| 48 | Example | 0.010 | 4.5 | ○ | ○ |
| 49 | Comparative Example | 0.002 | 20.0 | × | ○ |
| 50 | Comparative Example | 0.002 | 20.0 | ○ | ○ |
| 51 | Comparative Example | 0.007 | 3.5 | ○ | ○ |
| 52 | Comparative Example | 0.004 | 20.0 | ○ | ○ |
| 53 | Example | 0.020 | 3.0 | ○ | ○ |
| 54 | Example | 0.007 | 3.5 | ○ | ○ |
| 55 | Example | 0.015 | 3.0 | ○ | ○ |
| 56 | Example | 0.120 | 3.0 | ○ | ○ |
| 57 | Example | 0.015 | 3.0 | ○ | ○ |
| 58 | Example | 0.003 | 2.0 | × | × |

| | | | | | |
|---|---|---|---|---|---|
| The underline indicates that the value is out of the range of the present invention. | | | | | |

**[Table 5A]**

| No. | Item | Properties | | |
|---|---|---|---|---|
| | | Sacrificial corrosion resistance | Water wet corrosion resistance Water flow corrosion resistance | Processability |
| 1 | Comparative Example | B | B | B |
| 2 | Comparative Example | B | B | B |
| 3 | Comparative Example | B | B | B |
| 4 | Example | A | AAA | S |
| 5 | Example | A | A | S |
| 6 | Example | A | AAA | S |
| 7 | Example | AAA | AAA | S |
| 8 | Example | AAA | AAA | S |
| 9 | Example | AAA | AAA | S |
| 10 | Example | S | AAA | A |
| 11 | Example | S | AAA | A |
| 12 | Example | S | AAA | A |
| 13 | Example | S | AAA | A |
| 14 | Example | A | A | S |
| 15 | Example | A | AAA | S |
| 16 | Example | AAA | AAA | S |
| 17 | Example | AAA | AAA | S |
| 18 | Example | S | AAA | A |
| 19 | Example | S | AAA | A |
| 20 | Example | S | AAA | A |
| 21 | Example | A | AAA | S |
| 22 | Example | A | AAA | S |
| 23 | Example | S | AAA | S |
| 24 | Example | S | AAA | S |
| 25 | Example | S | AAA | A |
| 26 | Comparative Example | B | B | B |
| 27 | Example | S | AA | S |
| 28 | Example | S | A | S |
| 29 | Comparative Example | B | B | B |

**[Table 5B]**

| No. | Item | Properties | | |
|---|---|---|---|---|
| | | Sacrificial corrosion resistance | Water wet corrosion resistance Water flow corrosion resistance | Processability |
| 30 | Example | AAA | AA | A |
| 31 | Comparative Example | B | B | B |
| 32 | Example | A | AAA | S |
| 33 | Example | AAA | AAA | S |
| 34 | Comparative Example | B | B | B |
| 35 | Example | S | AA | S |
| 36 | Example | AAA | S | AA |
| 37 | Example | AAA | AAA | AA |
| 38 | Comparative Example | B | B | B |
| 39 | Example | AAA | AA | S |
| 40 | Example | AAA | AA | s |
| 41 | Comparative Example | B | B | B |
| 42 | Comparative Example | B | B | B |
| 43 | Example | s | s | s |
| 44 | Example | AAA | AAA | S |
| 45 | Example | AAA | AAA | AA |
| 46 | Comparative Example | B | B | B |
| 47 | Example | S | AA | S |
| 48 | Example | S | S | S |
| 49 | Comparative Example | B | B | B |
| 50 | Comparative Example | B | B | B |
| 51 | Comparative Example | B | B | B |
| 52 | Comparative Example | B | B | B |
| 53 | Example | S | AAA | S |
| 54 | Example | A | S | S |
| 55 | Example | A | A | AA |
| 56 | Example | S | AAA | S |
| 57 | Example | S | S | S |
| 58 | Example | AAA | AA | A |

## Claims

1. A plated steel material comprising:
a steel material; and
a plating layer disposed on a surface of the steel material,
wherein the plating layer has an average chemical composition including, in terms of mass%,
Al: 10.0% to 40.0%,
Mg: more than 4.0% to 8.5%,
Si: 0% to 5.0%,
Ca: 0% to 3.00%,
Sn: 0% to 3.00%,
Bi: 0% to 1.00%,
In: 0% to 1.00%,
Y: 0% to 0.50%,
La: 0% to 0.50%,
Ce: 0% to 0.50%,
Sr: 0% to 0.50%,
B: 0% to 1.00%,
P: 0% to 0.50%,
Cr: 0% to 0.25%,
Ti: 0% to 0.25%,
V: 0% to 0.25%,
Zr: 0% to 0.25%,
Ni: 0% to 1.00%,
Co: 0% to 0.25%,
Nb: 0% to 0.25%,
Cu: 0% to 1.00%,
Mn: 0% to 0.25%,
Mo: 0% to 0.25%,
W: 0% to 0.25%,
Ag: 0% to 1.00%,
Li: 0% to 0.50%,
Na: 0% to 0.05%,
K: 0% to 0.05%,
Fe: 0% to 5.00%,
Sb: 0% to 0.50%,
Pb: 0% to 0.50%,
Ba: 0% to 0.25%, and
the remainder: Zn and impurities,
in a cross section of the plating layer perpendicular to a surface of the steel material, a microstructure observed with a scanning electron microscope includes, in terms of area fraction,
a MgZn₂ phase: 10% or more and 50% or less,
a total of an Al phase, an Al-Zn phase, and an Zn-Al phase: 15% or more and 75% or less,
a [ternary eutectic structure of Al/MgZn₂/Zn]: 0% or more and 65% or less, and
the remainder: 0% or more and 5.0% or less, and
an area ratio (([Al] + [Zn - Al])/[Al - Zn]) of a total of the Al phase and the Zn-Al phase to the Al-Zn phase is 0.8 or more, wherein
the Al-Zn phase is a phase containing 65 to 75 mass% of Zn and Al,
the Zn-Al phase is a phase containing 75 to 85 mass% of Zn and Al,
the Al phase is a region where the Al content is more than 35 mass% in the plating layer,
wherein for each phase, the composition and the area percentage are determined in accordance to the methods in the description.

2. The plated steel material according to claim 1, wherein
in the average chemical composition of the plating layer, Si is 0.05% to 5.0%, and
an integrated intensity value of each element in a surface layer when depth analysis by GDS is performed on the surface layer from a surface of the plating layer to a depth of 0.5 µm satisfies the following formula (1): $IΣ \left(Si\right) / \left(IΣ\left(Zn\right)+IΣ\left(Al\right)\right) \geq 0.005$ (1)
wherein IΣ(Si), IΣ(Zn), and IΣ(Al) in formula (1) are integrated intensity values of Si, Zn, and Al detected by GDS, respectively, wherein GDS measurements are performed according to the method in the description.

3. The plated steel material according to claim 1 or 2,
wherein in the average chemical composition of the plating layer, Ca is 0.01% to 3%,
the plating layer contains any one of a Ca₃Al₂Si₂ phase, a CaAl₂Si₂ phase, and a CaAl₁Si₁₊ₓ phase (where x is 0 to 0.2), and
an integrated intensity value of each element in a surface layer when depth analysis by GDS is performed on the surface layer from a surface of the plating layer to a depth of 0.5 µm satisfies the following formula (2): $IΣ \left(Ca\right) / IΣ \left(Si\right) \geq 2.0$ (2)
wherein IΣ(Ca) and IΣ(Si) in formula (2) are integrated intensity values of Ca and Si detected by GDS, respectively.

## Patentansprüche

1. Ein plattiertes Stahlmaterial, umfassend:
ein Stahlmaterial; und
eine auf einer Oberfläche des Stahlmaterials angeordnete Plattierungsschicht,
wobei die Plattierungsschicht eine durchschnittliche chemische Zusammensetzung aufweist, die, ausgedrückt als Massen-%, beinhaltet:
Al: 10,0% bis 40,0%,
Mg: mehr als 4,0% bis 8,5%,
Si: 0% bis 5,0%,
Ca: 0% bis 3,00%,
Sn: 0% bis 3,00%,
Bi: 0% bis 1,00%,
In: 0% bis 1,00%,
Y: 0% bis 0,50%,
La: 0% bis 0,50%,
Ce: 0% bis 0,50%,
Sr: 0% bis 0,50%,
B: 0% bis 1,00%,
P: 0% bis 0,50%,
Cr: 0% bis 0,25%,
Ti: 0% bis 0,25%,
V: 0% bis 0,25%,
Zr: 0% bis 0,25%,
Ni: 0% bis 1,00%,
Co: 0% bis 0,25%,
Nb: 0% bis 0,25%,
Cu: 0% bis 1,00%,
Mn: 0% bis 0,25%,
Mo: 0% bis 0,25%,
W: 0% bis 0,25%,
Ag: 0% bis 1,00%,
Li: 0% bis 0,50%,
Na: 0% bis 0,05%,
K: 0% bis 0,05%,
Fe: 0% bis 5,00%,
Sb: 0% bis 0,50%,
Pb: 0% bis 0,50%,
Ba: 0% bis 0,25% und
den Rest: Zn und Verunreinigungen,
in einem Querschnitt der Plattierungsschicht senkrecht zu einer Oberfläche des Stahlmaterials eine mit einem Rasterelektronenmikroskop betrachtete Mikrostruktur, ausgedrückt als Flächenanteil, beinhaltet:
eine MgZn₂-Phase: 10% oder mehr und 50% oder weniger,
eine Summe aus einer Al-Phase, einer Al-Zn-Phase und einer Zn-Al-Phase: 15% oder mehr und 75% oder weniger,
eine [ternäre eutektische Struktur aus Al/MgZn₂/Zn]: 0% oder mehr und 65% oder weniger und
den Rest: 0% oder mehr und 5,0% oder weniger, und
ein Flächenverhältnis (([Al] + [Zn - Al])/[Al - Zn]) einer Summe aus der Al-Phase und der Zn-Al-Phase zu der Al-Zn-Phase 0,8 oder mehr beträgt, wobei
die Al-Zn-Phase eine Phase ist, die 65 bis 75 Massen-% Zn und Al enthält,
die Zn-Al-Phase eine Phase ist, die 75 bis 85 Massen-% Zn und Al enthält,
die Al-Phase ein Bereich ist, in dem der Al-Gehalt in der Plattierungsschicht mehr als 35 Massen-% beträgt,
wobei für jede Phase die Zusammensetzung und der Flächenanteil gemäß den Verfahren in der Beschreibung bestimmt werden.

2. Das plattierte Stahlmaterial nach Anspruch 1, wobei
in der durchschnittlichen chemischen Zusammensetzung der Plattierungsschicht Si 0,05% bis 5,0% beträgt und
ein integrierter Intensitätswert jedes Elements in einer Oberflächenschicht, wenn eine Tiefenanalyse mittels GDS auf der Oberflächenschicht von einer Oberfläche der Plattierungsschicht bis zu einer Tiefe von 0,5 µm durchgeführt wird, die folgende Formel (1) erfüllt: $IΣ \left(Si\right) / \left(IΣ\left(Zn\right)+IΣ\left(Al\right)\right) \geq 0 , 005$ (1)
wobei IΣ(Si), IΣ(Zn) und IΣ(Al) in Formel (1) durch GDS erfasste integrierte Intensitätswerte von Si, Zn bzw. Al sind, wobei GDS-Messungen gemäß dem Verfahren in der Beschreibung durchgeführt werden.

3. Das plattierte Stahlmaterial nach Anspruch 1 oder 2,
wobei in der durchschnittlichen chemischen Zusammensetzung der Plattierungsschicht Ca 0,01% bis 3% beträgt,
die Plattierungsschicht eine von einer Ca₃Al₂Si₂-Phase, einer CaAl₂Si₂-Phase und einer CaAl₁₋ₓSi₁₊ₓ-Phase (wobei x 0 bis 0,2 ist) enthält und
ein integrierter Intensitätswert jedes Elements in einer Oberflächenschicht, wenn eine Tiefenanalyse mittels GDS auf der Oberflächenschicht von einer Oberfläche der Plattierungsschicht bis zu einer Tiefe von 0,5 µm durchgeführt wird, die folgende Formel (2) erfüllt: $IΣ \left(Ca\right) / IΣ \left(Si\right) \geq 2 , 0$ (2)
wobei IΣ(Ca) und IΣ(Si) in Formel (2) durch GDS erfasste integrierte Intensitätswerte von Ca bzw. Si sind.

## Revendications

1. Matériau en acier plaqué comprenant :
un matériau en acier ; et
une couche de placage disposée sur une surface du matériau en acier,
dans lequel la couche de plaquage a une composition chimique moyenne comprenant, en termes de % en masse,
Al : 10,0 % à 40,0 %,
Mg : plus de 4,0 % à 8,5 %,
Si : 0 % à 5,0 %,
Ca : 0 % à 3,00 %,
Sn : 0 % à 3,00 %,
Bi: 0 %à 1,00 %,
In : 0 % à 1,00 %,
Y : 0 % à 0,50 %,
La : 0 % à 0,50 %,
Ce : 0 % à 0,50 %,
Sr : 0 % à 0,50 %,
B : 0 % à 1,00 %,
P : 0 % à 0,50 %,
Cr : 0 % à 0,25 %,
Ti : 0 % à 0,25 %,
V : 0 % à 0,25 %,
Zr : 0 % à 0,25 %,
Ni : 0 % à 1,00 %,
Co : 0 % à 0,25 %,
Nb : 0 % à 0,25 %,
Cu: 0 % à 1,00 %,
Mn : 0 % à 0,25 %,
Mo : 0 % à 0,25 %,
W : 0 % à 0,25 %,
Ag : 0 % à 1,00 %,
Li : 0 % à 0,50 %,
Na : 0 % à 0,05 %,
K : 0 % à 0,05 %,
Fe : 0 % à 5,00 %,
Sb : 0 % à 0,50 %,
Pb : 0 % à 0,50 %,
Ba : 0 % à 0,25 %, et
le reste : Zn et impuretés,
dans une section transversale de la couche de placage perpendiculaire à une surface du matériau en acier, une microstructure observée au microscope électronique à balayage inclut, en termes de fraction surfacique,
une phase de MgZn₂ : 10 % ou plus et 50 % ou moins,
le total d'une phase d'Al, d'une phase d'Al-Zn, et d'une phase de Zn-Al : 15 % ou plus et 75 % ou moins,
une [structure eutectique ternaire d'Al/MgZn₂/Zn] : 0 % ou plus et 65 % ou moins, et
le reste : 0 % ou plus et 5,0 % ou moins, et
le rapport surfacique (([Al] + [Zn - Al]) / [Al - Zn]) du total de la phase d'Al et de la phase de Zn-Al à la phase d'Al-Zn est de 0,8 ou plus, dans lequel
la phase d'Al-Zn est une phase contenant 65 à 75 % en masse de Zn et d'Al,
la phase de Zn-Al est une phase contenant 75 à 85 % en masse de Zn et d'Al,
la phase d'Al est une région où la teneur en Al est supérieure à 35 % en masse dans la couche de placage,
dans lequel, pour chaque phase, la composition et le pourcentage surfacique sont déterminés conformément aux méthodes dans la description.

2. Matériau en acier plaqué selon la revendication 1, dans lequel
dans la composition chimique moyenne de la couche de placage, Si est présent à raison de 0,05 % à 5,0 %, et
la valeur d'intensité intégrée de chaque élément dans une couche de surface quand une analyse en profondeur par GDS est effectuée sur la couche de surface depuis une surface de la couche de placage jusqu'à une profondeur de 0,5 µm satisfait la formule (1) suivante : $IΣ \left(Si\right) / \left(IΣ\left(Zn\right)+IΣ\left(Al\right)\right) \geq 0 , 005$ (1)
dans lequel IΣ(Si), IΣ(Zn) et IΣ(Al) dans la formule (1) sont des valeurs d'intensité intégrées de Si, Zn et Al détectées par GDS, respectivement, dans lequel les mesures GDS sont effectuées conformément à la méthode dans la description.

3. Matériau en acier plaqué selon la revendication 1 ou 2,
dans lequel, dans la composition chimique moyenne de la couche de placage, Ca est présent à raison de 0,01 % à 3 %,
la couche de placage contient l'une quelconque parmi une phase de Ca₃Al₂Si₂, une phase de CaAl₂Si₂, et une phase de CaAl₁₋ₓSi₁₊ₓ (où x vaut de 0 à 0,2), et
la valeur d'intensité intégrée de chaque élément dans une couche de surface quand une analyse en profondeur par GDS est effectuée sur la couche de surface depuis une surface de la couche de placage jusqu'à une profondeur de 0,5 µm satisfait la formule (2) suivante : $IΣ \left(Ca\right) / IΣ \left(Si\right) \geq 2 , 0$ (2)
dans lequel IΣ(Ca) et IΣ(Si) dans la formule (2) sont des valeurs d'intensité intégrées de Ca et Si détectées par GDS, respectivement.
